(19) Europäisches Patentamt
European Patent Office
Office européen des brevets

(11) **EP 4 776 015 A1**

(12) **EUROPEAN PATENT APPLICATION**
published in accordance with Art. 153(4) EPC

(43) Date of publication:
**15.07.2026 Bulletin 2026/29**

(21) Application number: **24884448.2**

(22) Date of filing: **17.10.2024**

(51) International Patent Classification (IPC):
**G01S 5/10** (2006.01)     **H04W 64/00** (2009.01)

(52) Cooperative Patent Classification (CPC):
**G01S 5/02; G01S 5/08; G01S 5/10; H04W 64/00**

(86) International application number:
**PCT/CN2024/125529**

(87) International publication number:
**WO 2025/092444 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 CN 202311435298**

(71) Applicant: **HUAWEI TECHNOLOGIES CO., LTD.**
**Shenzhen, Guangdong 518129 (CN)**

(72) Inventors:
• **ZHU, Ningbo**
  **Shenzhen, Guangdong 518129 (CN)**
• **YE, Chencheng**
  **Shenzhen, Guangdong 518129 (CN)**
• **HUANG, Su**
  **Shenzhen, Guangdong 518129 (CN)**
• **HAO, Jinping**
  **Shenzhen, Guangdong 518129 (CN)**
• **LI, Cheng**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **NEAR-FIELD POSITIONING METHOD, AND COMMUNICATION APPARATUS**

(57)     This application provides a near-field positioning method and a communication apparatus. In the method, a terminal device measures N reference signals corresponding to N beams from a network device, to obtain RSRP corresponding to the N beams, where N is a positive integer; and the terminal device determines a location of the terminal device based on the RSRP corresponding to the N beams and based on distances and angles corresponding to the N beams, where a distance and an angle corresponding to any beam are a distance and an angle of a center location of the beam relative to a reference antenna of the network device. The method specifies how to implement positioning of the terminal device in a near-field communication range.

500

Network device | Terminal device

S530: Send a reference signal by using at least one beam, where the at least one beam includes N beams

S510: Measure reference signals corresponding to the N beams, to obtain RSRP corresponding to the N beams

S520: Determine a location of the terminal device based on the RSRP corresponding to the N beams and based on distances and angles corresponding to the N beams

FIG. 5

## Description

This application claims priority to Chinese Patent Application No. 202311435298.4, filed with the China National Intellectual Property Administration on October 30, 2023 and entitled "NEAR-FIELD POSITIONING METHOD AND COMMUNICATION APPARATUS", which is incorporated herein by reference in its entirety.

## TECHNICAL FIELD

This application relates to the communication field, and more specifically, to a near-field positioning method and a communication apparatus.

## BACKGROUND

As antenna panels have a larger size and communication frequency bands become higher, a range of near-field communication of base stations may be expanded. For example, a communication radius of the near-field communication range may reach tens of meters or even hundreds of meters. Therefore, near-field communication becomes possible in the future. A positioning method in far-field communication is generally based on a plane wave (plane wave) assumption, under which equiphase surfaces of plane waves are planar. However, the plane wave assumption does not hold in near field. In near-field communication, modeling is performed based on a spherical wave (spherical wave) model, and equiphase surfaces in electromagnetic wave propagation process are spherical. Because existing positioning technologies are based on the plane wave assumption in the far-field communication, how to implement positioning of a terminal device within the near-field communication range becomes an urgent problem to be resolved.

## SUMMARY

This application provides a near-field positioning method and a communication apparatus. The method specifies positioning of a terminal device in a near-field communication range. For ease of description, the following uses an example in which the method is performed by the terminal device for description.

According to a first aspect, a near-field positioning method is provided. The method may be performed by a terminal device, or may be performed by a component (for example, a chip or a circuit) of the terminal device. This is not limited.

The method includes: The terminal device measures N reference signals corresponding to N beams from a network device, to obtain RSRP corresponding to the N beams, where N is a positive integer; and the terminal device determines a location of the terminal device based on the RSRP corresponding to the N beams and based on distances and angles corresponding to the N beams, where a distance corresponding to a first beam is a distance between a center location of the first beam and a reference antenna of the network device, an angle corresponding to the first beam is an angle of the center location of the first beam relative to the reference antenna, and the first beam is any one of the N beams.

It may be understood that when the method is applied to near-field communication, the N beams each are a beam formed by a spherical wave (spherical wave).

It may be further understood that the foregoing obtained N pieces of RSRP are in one-to-one correspondence with the measured N reference signals, and the N reference signals are in one-to-one correspondence with the N beams. Therefore, the N beams are in one-to-one correspondence with the N pieces of RSRP.

It may be further understood that the method is applicable to downlink positioning, and in the method, a target terminal device calculates location information of the target terminal device.

The foregoing technical solution specifies that positioning of the terminal device may be implemented in a near-field communication range based on RSRP corresponding to a measured beam and distance information and angle information that correspond to the beam.

In some implementations of the first aspect, N is equal to 1, and the N beams are a beam with largest RSRP in at least one beam that is received by the terminal device from the network device.

It may be understood that, in the method, a location determined based on a distance and an angle that correspond to the beam with the largest RSRP is a center location of the beam with the largest RSRP. In other words, in the method, the center location of the beam with the largest RSRP is used as the location of the terminal device. This technical solution has low implementation difficulty and simple calculation.

In some implementations of the first aspect, N is greater than 1, and that the terminal device determines the location of the terminal device based on the RSRP corresponding to the N beams and based on the distances and the angles corresponding to the N beams includes: The terminal device determines the location of the terminal device based on ratios of the RSRP corresponding to the N beams to RSRP corresponding to a reference beam, and the distances and angles corresponding to the N beams, where the reference beam is any one of the N beams.

In the foregoing technical solution, positioning accuracy can be improved based on RSRP corresponding to a plurality of beams and corresponding distance information and angle information. The positioning method may be applicable to a positioning service that has a high positioning accuracy requirement.

In some implementations of the first aspect, the method further includes: The terminal device receives a first request message from a location management function LMF, where the first request message is used to request to perform positioning measurement on the terminal device; and the terminal device sends a response to the first request message to the LMF, where the response to the first request message includes location information of the terminal device.

In some implementations of the first aspect, the method further includes: The terminal device receives first information from the location management function LMF, where the first information includes at least one of the following parameters: identifiers of N reference signal resources corresponding to the N reference signals, configuration information of the N reference signals, information about a distance and an angle that correspond to any one of the N beams, and relative field strength values of the N reference signals at a plurality of first locations corresponding to a plurality of first combinations, where the plurality of combinations are in one-to-one correspondence with the plurality of first locations, the first combination includes a first distance and a first angle, and the first distance and the first angle are used to determine a corresponding first location.

In some implementations of the first aspect, that the terminal device determines the location of the terminal device based on the ratios of the RSRP corresponding to the N beams to the RSRP corresponding to the reference beam, and the distances and angles corresponding to the N beams includes: The terminal device determines the location of the terminal device based on the ratios of the RSRP of the N beams, the relative field strength values of the N reference signals at the plurality of first locations corresponding to the plurality of first combinations, and the plurality of first combinations.

In the foregoing technical solution, the terminal device may compare relative values of the RSRP of the N beams measured by the terminal device at a resolved location with relative values of the RSRP of the N beams theoretically measured at a plurality of preset first locations, select, from the plurality of first locations, a first location that satisfies a specific condition as the location of the terminal device, and then determine the location of the terminal device based on a distance and an angle that correspond to the first location.

In some implementations of the first aspect, the method further includes: The terminal device receives the N reference signals from the network device on the N reference signal resources, where the N reference signal resources correspond to different frequency domain units.

It may be understood that the network device may send, to the terminal device, a plurality of beams used for positioning. When resources are limited, the plurality of beams may be sent in a time division manner. This may increase a positioning delay or reduce positioning accuracy and real-time performance. For example, in the foregoing technical solution, the network device may allocate different frequency domain units to different beams, and separately perform precoding on different frequency domain units of reference signals corresponding to different beams. In this way, the network device may send different beams to the terminal device based on different frequency domain units at the same time. In comparison with sending different beams through time division, the positioning delay can be reduced, and a real-time positioning result can be obtained.

In some implementations of the first aspect, the first information further includes an identifier of a frequency domain unit corresponding to any one of the N reference signal resources.

According to a second aspect, a near-field positioning method is provided. The method may be performed by a terminal device, or may be performed by a component (for example, a chip or a circuit) of the terminal device. This is not limited. For ease of description, the following uses an example in which the method is performed by the terminal device for description.

The method includes: The terminal device measures at least one reference signal corresponding to at least one beam from a network device, to obtain RSRP corresponding to the at least one beam; and the terminal device sends first information to a location management function LMF, where the first information indicates a reference signal resource corresponding to a beam with largest RSRP in the at least one beam; or the first information indicates RSRP corresponding to N beams or ratios of the RSRP corresponding to the N beams to RSRP corresponding to a reference beam, where N is a positive integer, and the reference beam is any one of the N beams.

If the first information indicates the reference signal resource corresponding to the beam with the largest RSRP in the at least one beam, for example, the first information may specifically include an identifier of the reference signal resource corresponding to the beam with the largest RSRP in the at least one beam.

If the first information indicates the RSRP corresponding to the N beams or the ratios of the RSRP corresponding to the N beams to the RSRP corresponding to the reference beam, for example, the first information may further include identifiers of reference signal resources corresponding to the N beams in the at least one beam, where one identifier indicates one reference signal resource.

It may be understood that when the method is applied to near-field communication, the N beams each are a beam formed by a spherical wave.

It may be further understood that, the method is applicable to downlink positioning, and in the method, the LMF calculates location information of the LMF.

The foregoing technical solution specifies that positioning of the terminal device may be implemented in a near-field communication range based on RSRP corresponding to a measured beam and distance information and angle information that correspond to the beam.

For beneficial effects of indicating, by the first information, the identifier of the beam with the largest RSRP in the at least one beam, or indicating, by the first information, identifiers of the N beams in the at least one beam, and the RSRP corresponding to the N beams or the ratios of the RSRP corresponding to the N beams to the RSRP corresponding to the reference beam, refer to the descriptions in the first aspect. Details are not described herein again.

In some implementations of the second aspect, the method further includes: The terminal device receives a first request message from the LMF, where the first request message is used to request to perform positioning measurement on the terminal device. That the terminal device sends the first information to the location management function LMF includes: The terminal device sends a response to the first request message to the LMF, where the response to the first request message includes the first information.

In some implementations of the second aspect, the method further includes: The terminal device receives second information from the LMF, where the second information includes at least one of the following parameters: an identifier of at least one reference signal resource and configuration information of the at least one reference signal, where the at least one reference signal resource includes a reference signal resource corresponding to each of the at least one reference signal.

In some implementations of the second aspect, the method further includes: The terminal device receives the at least one reference signal from the network device on different frequency domain units of the reference signal resource corresponding to the at least one reference signal, where the at least one reference signal resource corresponds to different frequency domain units.

It may be understood that the network device may send, to the terminal device, a plurality of beams used for positioning. When resources are limited, the plurality of beams may be sent in a time division manner. This may increase a positioning delay or reduce positioning accuracy and real-time performance. For example, in the foregoing technical solution, the network device may allocate different frequency domain units to different beams, and separately perform precoding on different frequency domain units of reference signals corresponding to different beams. In this way, the network device may send different beams to the terminal device based on different frequency domain units at the same time. In comparison with sending different beams through time division, the positioning delay can be reduced, and a real-time positioning result can be obtained.

In some implementations of the second aspect, the second information further includes an identifier of a frequency domain unit corresponding to any one of the reference signal resource corresponding to the at least one reference signal.

In the foregoing technical solution, the LMF may notify, by using the second information, the terminal device to receive a corresponding beam on a corresponding frequency domain unit.

In some implementations of the first aspect or the second aspect, the method further includes: The terminal device determines third information, where the third information indicates that the terminal device is located in a near-field communication range or a far-field communication range corresponding to the network device; and the terminal device sends the third information to the LMF.

In the foregoing technical solution, the terminal device may notify, by using the third information, the LMF whether the terminal device enters the near-field communication range. For example, when the terminal device notifies the LMF that the terminal device enters a near field, the LMF may position the target terminal device by using the near-field positioning method provided above. In the method, a problem that a positioning result is inaccurate because the LMF cannot sense that the terminal device enters the near-field communication range and an improper positioning method is used can be avoided.

In some implementations of the first aspect or the second aspect, the third information is carried in a positioning protocol message. For example, the positioning protocol message is an LPP message.

For example, the positioning protocol message is used to request assistance data for positioning measurement. For example, the positioning protocol message is request assistance data (Request Assistance Data).

For example, the positioning protocol message is used to provide positioning information of the terminal device. For example, the positioning protocol message is provide location information (Provide Location Information).

In some implementations of the first aspect or the second aspect, the third information is carried in a non-access stratum (Non-Access Stratum, NAS) message or a location service LCS message.

For example, the NAS message or the LCS message is used to initiate a positioning service request.

In some implementations of the first aspect or the second aspect, that the terminal device determines the third information includes: The terminal device determines the third information based on system broadcast information from the network device, where the system broadcast information indicates that the terminal device that receives the system broadcast information is located in the near-field communication range or the far-field communication range; the terminal device determines the third information based on historically obtained location information of the terminal device; or the terminal device determines the third information based on channel information obtained by measuring the reference signal. For example, if a channel feature is closer to a channel feature in the near field, the terminal device considers that the terminal device enters the near-field range.

The foregoing technical solution provides several possible determining manners in which the terminal device determines whether the terminal device is located in the near-field communication range or the far-field communication range.

According to a third aspect, a near-field positioning method is provided. The method may be performed by a location management function network element, or may be performed by a component (for example, a chip or a circuit) of the location management function network element. This is not limited. For ease of description, the following uses an example in which the method is performed by the location management function LMF network element for description.

The method includes: The location management function LMF receives first information from a terminal device, where the first information indicates a reference signal resource corresponding to a beam with largest reference signal received power RSRP in at least one beam that is received by the terminal device from a network device; or the first information indicates RSRP corresponding to N beams or ratios of the RSRP corresponding to the N beams to RSRP corresponding to a reference beam, where the reference beam is any one of the N beams; and the LMF determines a location of the terminal device based on the first information.

For beneficial effects of the third aspect, refer to the descriptions in the second aspect. Details are not described herein again.

In some implementations of the third aspect, if the first information indicates the reference signal resource corresponding to the beam with the largest RSRP in the at least one beam that is received by the terminal device from the network device, that the LMF determines the location of the terminal device based on the first information includes: The LMF determines the location of the terminal device based on a distance and an angle that correspond to the beam with the largest RSRP, where the distance corresponding to the beam with the largest RSRP is a distance between a center location corresponding to the beam with the largest RSRP and a reference antenna of the network device, and the angle corresponding to the beam with the largest RSRP is an angle of the center location of the beam with the largest RSRP relative to the reference antenna.

In some implementations of the third aspect, if the first information indicates the RSRP corresponding to the N beams or the ratios of the RSRP corresponding to the N beams to the RSRP corresponding to the reference beam, that the LMF determines the location of the terminal device based on the first information includes: The LMF determines the location of the terminal device based on the ratios of the RSRP corresponding to the N beams to the RSRP corresponding to the reference beam, and distances and angles that correspond to the N beams.

In some implementations of the third aspect, the method further includes: The LMF sends a first request message to the terminal device, where the first request message is used to request to perform positioning measurement on the terminal device. That the LMF receives the first information from the terminal device includes: The LMF receives a response to the first request message from the terminal device, where the response to the first request message includes the first information.

In some implementations of the third aspect, the method further includes: The LMF sends second information to the terminal device, where the second information includes at least one of the following parameters: an identifier of at least one reference signal resource and configuration information of a reference signal corresponding to the at least one beam, where the at least one reference signal resource includes a reference signal resource corresponding to each of the at least one beam.

In some implementations of the third aspect, the second information further includes an identifier of a frequency domain unit corresponding to any one of the at least one reference signal resource.

In some implementations of the third aspect, the method further includes: The LMF sends a second request message to the network device, where the second request message is used to request the second information; and the LMF receives a second request response message from the network device, where the second request response message includes the second information.

In some implementations of the third aspect, the method further includes: The LMF receives third information, where the third information indicates that the terminal device is located in a near-field communication range or a far-field communication range corresponding to the network device; and the LMF selects, based on the third information, a proper positioning method to position the terminal device.

In some implementations of the third aspect, the LMF receives the third information from the terminal device.

In some implementations of the third aspect, the third information is carried in a positioning protocol message. For example, the positioning protocol message is an LPP message.

For example, the positioning protocol message is used to request assistance data for positioning measurement. For example, the positioning protocol message is request assistance data (Request Assistance Data).

For example, the positioning protocol message is used to provide positioning information of the terminal device.

For example, the positioning protocol message is provide location information (Provide Location Information).

In some implementations of the third aspect, the third information is carried in a non-access stratum NAS message or a location service LCS message.

For example, the NAS message or the LCS message is used to initiate a positioning service request.

In some implementations of the third aspect, the LMF receives the third information from the network device.

In some implementations of the third aspect, the method further includes: The LMF sends a request message #3 to the network device, where the request message #3 is for requesting the network device to report that the terminal device is located in the near-field communication range or the far-field communication range. In this case, that the LMF receives the third information from the network device includes: The LMF receives a request response message #3 from the network device, where the request response message #3 includes the third information.

According to a fourth aspect, a near-field positioning method is provided. The method may be performed by a network device, or may be performed by a component (for example, a chip or a circuit) of the network device. This is not limited. For ease of description, the following uses an example in which the method is performed by the network device for description.

The method includes: The network device receives a reference signal from a terminal device; the network device measures the reference signal to obtain a first distance and a first angle that correspond to a first location, where the first location is a location in a near-field communication range of the network device, the first distance is a distance between the first location and a reference antenna of the network device, and the first angle is an angle of the first location relative to the reference antenna; and the network device sends the first distance and the first angle to a location management function LMF, where the first distance and the first angle are used to determine a location of the terminal device, and the location of the terminal device is the first location; or the network device sends location information of the terminal device to the LMF, where the location of the terminal device is the first location determined based on the first distance and the first angle.

It may be understood that the method is applicable to uplink positioning in the near-field communication range. In the method, the network device may measure the reference signal from the terminal device to determine the first distance and the first angle. The network device may send the first distance and the first angle to the LMF, and the LMF calculates the location information of the terminal device. Alternatively, the network device may determine the location of the terminal device based on the first distance and the first angle, and then notify the LMF of a calculation result.

In some implementations of the fourth aspect, the method further includes: The network device determines third information, where the third information indicates that the terminal device is located in the near-field communication range or a far-field communication range corresponding to the network device; and the network device sends the third information to the location management function LMF.

For example, the network device may determine, based on the reference signal (for example, an SRS) sent by the terminal device, whether the terminal device is located in a near field, to determine the third information.

In some implementations of the fourth aspect, the method further includes: The network device receives a request message #3 from the LMF, where the request message #3 is for requesting the network device to report that the terminal device is located in the near-field communication range or the far-field communication range. In this case, that the network device sends the third information to the LMF includes: The network device sends a request response message #3 to the LMF, where the request response message #3 includes the third information.

According to a fifth aspect, a near-field positioning method is provided. The method may be performed by a location management function network element, or may be performed by a component (for example, a chip or a circuit) of the location management function network element. This is not limited. For ease of description, the following uses an example in which the method is performed by the location management function LMF network element for description.

The method includes: The location management function LMF receives a first distance and a first angle that correspond to a first location from a network device, where the first location is a location in a near-field communication range of the network device, the first distance is a distance between the first location and a reference antenna of the network device, and the first angle is an angle of the first location relative to the reference antenna; and the LMF determines a location of a terminal device based on the first distance and the first angle, where the location of the terminal device is the first location.

In the method, the LMF determines the location of the terminal device based on the first distance and the first angle that are received from the network device.

In some implementations of the fifth aspect, the method further includes: The LMF receives third information, where the third information indicates that the terminal device is located in a near-field communication range or a far-field communication range corresponding to the network device; and the LMF selects, based on the third information, a proper positioning method to position the terminal device.

In some implementations of the fifth aspect, the LMF receives the third information from the terminal device.

In some implementations of the fifth aspect, the third information is carried in a positioning protocol message. For example, the positioning protocol message is an LPP message.

For example, the positioning protocol message is used to request assistance data for positioning measurement.

For example, the positioning protocol message is request assistance data (Request Assistance Data).

For example, the positioning protocol message is used to provide positioning information of the terminal device. For example, the positioning protocol message is provide location information (Provide Location Information).

In some implementations of the fifth aspect, the third information is carried in a non-access stratum NAS message or a location service LCS message.

For example, the NAS message or the LCS message is used to initiate a positioning service request.

In some implementations of the fifth aspect, the LMF receives the third information from the network device.

In some implementations of the fifth aspect, the method further includes: The LMF sends a request message #3 to the network device, where the request message #3 is for requesting the network device to report that the terminal device is located in the near-field communication range or the far-field communication range. In this case, that the LMF receives the third information from the network device includes: The LMF receives a request response message #3 from the network device, where the request response message #3 includes the third information.

According to a sixth aspect, a communication apparatus is provided. The communication apparatus is configured to perform the method provided in any one of the first aspect to the fifth aspect. Specifically, the communication apparatus may include a unit and/or a module configured to perform the method provided in any one of the first aspect or the implementations of the first aspect, include a unit and/or a module configured to perform the method provided in any one of the second aspect or the implementations of the second aspect, include a unit and/or a module configured to perform the method provided in any one of the third aspect or the implementations of the third aspect, include a unit and/or a module configured to perform the method provided in any one of the fourth aspect or the implementations of the fourth aspect, or include a unit and/or a module configured to perform the method provided in any one of the fifth aspect or the implementations of the fifth aspect.

In an implementation, the communication apparatus is a device (for example, a terminal device, an LMF, or a network device). When the communication apparatus is the device, a transceiver unit may be a transceiver or an input/output interface, and a processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a terminal device, an LMF, or a network device). When the communication apparatus is the chip, the chip system, or the circuit used in the device, a transceiver unit may be an input/output interface, an interface circuit, an output circuit, an input circuit, a pin, a related circuit, or the like in the chip, the chip system, or the circuit; and a processing unit may be at least one processor, a processing circuit, a logic circuit, or the like.

According to a seventh aspect, a communication apparatus is provided. The apparatus includes: a memory, configured to store a program; and at least one processor, configured to execute the computer program or instructions stored in the memory, to perform the method provided in any one of the first aspect or the implementations of the first aspect, perform the method provided in any one of the second aspect or the implementations of the second aspect, perform the method provided in any one of the third aspect or the implementations of the third aspect, perform the method provided in any one of the fourth aspect or the implementations of the fourth aspect, or perform the method provided in any one of the fifth aspect or the implementations of the fifth aspect.

In an implementation, the communication apparatus is a device (for example, a terminal device, an LMF, or a network device).

In another implementation, the apparatus is a chip, a chip system, or a circuit used in a device (for example, a terminal device, an LMF, or a network device).

According to an eighth aspect, this application provides a processor, configured to perform the methods provided in the foregoing aspects.

Unless otherwise specified, or if operations such as sending and obtaining/receiving related to the processor do not conflict with actual functions or internal logic of the operations in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a computer-readable storage medium is provided. The computer-readable medium stores program code executed by a device. The program code includes instructions used to perform the method provided in any one of the first aspect or the implementations of the first aspect, includes instructions used to perform the method provided in any one of the second aspect or the implementations of the second aspect, includes instructions used to perform the method provided in any one of the third aspect or the implementations of the third aspect, includes instructions used to perform the method provided in any one of the fourth aspect or the implementations of the fourth aspect, or includes instructions used to perform the method provided in any one of the fifth aspect or the implementations of the fifth aspect.

According to a tenth aspect, a computer program product including instructions is provided. When the computer program product runs on a computer, the computer is caused to perform the method provided in any one of the first aspect or the implementations of the first aspect, the computer is caused to perform the method provided in any one of the second aspect or the implementations of the second aspect, the computer is caused to perform the method provided in any one of the third aspect or the implementations of the third aspect, the computer is caused to perform the method provided in any one of the fourth aspect or the implementations of the fourth aspect, or the computer is caused to perform the method provided in any one of the fifth aspect or the implementations of the fifth aspect.

According to an eleventh aspect, a chip is provided. The chip includes a processor and a communication interface. The processor reads, through the communication interface, instructions stored in a memory, to perform the method provided in any one of the first aspect or the implementations of the first aspect, perform the method provided in any one of the second aspect or the implementations of the second aspect, perform the method provided in any one of the third aspect or the implementations of the third aspect, perform the method provided in any one of the fourth aspect or the implementations of the fourth aspect, or perform the method provided in any one of the fifth aspect or the implementations of the fifth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the first aspect or the implementations of the first aspect, perform the method provided in any one of the second aspect or the implementations of the second aspect, perform the method provided in any one of the third aspect or the implementations of the third aspect, perform the method provided in any one of the fourth aspect or the implementations of the fourth aspect, or perform the method provided in any one of the fifth aspect or the implementations of the fifth aspect.

According to a twelfth aspect, a communication system is provided, including at least one of the foregoing terminal device, LMF, and network device.

## BRIEF DESCRIPTION OF DRAWINGS

FIG. 1 is a diagram of a wireless communication system 100 applicable to an embodiment of this application;
FIG. 2 is a diagram of a wireless communication system 200 applicable to an embodiment of this application;
FIG. 3 is a diagram of a basic procedure of downlink positioning;
FIG. 4 is a diagram of a near-field communication range and a far-field communication range;
FIG. 5 is a schematic flowchart of a near-field positioning method 500 according to this application;
FIG. 6 is a diagram of a distance and an angle that correspond to a beam in a near-field communication range;
FIG. 7 is a diagram of a plurality of beams sent by a network device in a near-field communication range;
FIG. 8 is a schematic flowchart of a near-field positioning method 800 according to this application;
FIG. 9 is a diagram of a plurality of beams sent on a plurality of subcarriers in a near-field communication range through frequency division;
FIG. 10 is a schematic flowchart of a near-field positioning method 1000 according to this application;
FIG. 11 is a block diagram of a communication apparatus 1100 according to an embodiment of this application; and
FIG. 12 is a block diagram of a communication apparatus 1200 according to an embodiment of this application.

## DESCRIPTION OF EMBODIMENTS

The following describes technical solutions in embodiments of this application with reference to accompanying drawings.

Before embodiments of this application are described, the following several points are first described.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms and similar operations or steps in embodiments may be mutually referenced or explained in embodiments. This is not limited in this application.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects, and "at least one of the following items (pieces)" or a similar expression thereof means any combination of these items, including any combination of singular items (pieces) or plural items (pieces). For example, at least one item (piece) of a, b, and c may indicate: a, b, c, a and b, a and c, b and c, or a, b, and c. Each of a, b, and c may be in a singular form or a plural form.

Third, in this application, "first", "second", and various numerical numbers indicate differentiation for ease of description, and are not used to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

Fourth, in this application, the terms "include", "have", and any variants thereof are intended to cover non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

Fifth, in this application, "indicating" may include "directly indicating" and "indirectly indicating". When a piece of indication information indicates A, the indication information may directly indicate A or indirectly indicate A, but it does not indicate that the indication information definitely carries A.

Sixth, in this application, "sending information to XX (a device)" may be understood as that a destination end of the information is the device, and may include directly or indirectly sending the information to the device. "Receiving information from XX (a device) or receiving information that is from XX (the device)" may be understood as that a source end of the information is the device, and may include directly or indirectly receiving the information from the device. Necessary processing, for example, a format change, may be performed on the information between the source end and the destination end of information sending, but the destination end may understand valid information from the source end.

Seventh, arrows or blocks shown by dashed lines in diagrams of the accompanying drawings in the specification of this application indicate optional steps or optional modules.

The technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR) and a future communication system, and vehicle-to-X (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), and machine to machine (machine-to-machine, M2M).

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a compute device, another processing device connected to a wireless modem, a vehicle-mounted device, a wearable device, an audio device, a terminal device in a future 5G network, a terminal device in a future evolved public land mobile network (Public Land Mobile Network, PLMN), or the like. This is not limited in embodiments of this application.

The terminal device in this application may alternatively be a road side communication unit (road side unit, RSU). The RSU is a facility deployed on the roadside to assist communication in a vehicle-mounted delay-tolerant network, which is directly connected to a backbone network and can perform wireless communication with a vehicle. Compared with a vehicle in the vehicle-mounted delay-tolerant network, the RSU has a better communication capability, a larger coverage range, and a higher transmission speed, and can communicate with a plurality of vehicles at the same time. In addition, the RSU has large storage space, to store information and improve a communication probability. Therefore, by deploying a related RSU in a road traffic system, an existing vehicle-mounted Internet access problem can be effectively resolved, and a communication opportunity between vehicles can be greatly increased. A message is cached by the RSU, to implement efficient message transmission between the vehicles.

For example, the terminal device may include a radio resource control (radio resource control, RRC) signaling exchange module, a medium access control (media access control, MAC) signaling exchange module, and a physical (physical, PHY) signaling exchange module. The RRC signaling exchange module may be a module used by a network device and the terminal device to send and receive RRC signaling. The MAC signaling exchange module may be a module used by the network device and the terminal device to send and receive MAC control element (control element, CE) (MAC-CE) signaling. The PHY signaling and data exchange module may be a module used by the network device and the terminal device to send and receive uplink control signaling, downlink control signaling, uplink and downlink data, or downlink data.

The network device in embodiments of this application may be a device configured to communicate with the terminal device, and the network device includes but is not limited to: an evolved NodeB (evolved NodeB, eNB or eNodeB) in an LTE system, a radio controller in a cloud radio access network (cloud radio access network, CRAN) scenario, a radio network controller (radio network controller, RNC), a base station controller (base station controller, BSC), a home base station (for example, a home evolved NodeB, or a home NodeB, HNB), or a baseband unit (baseband unit, BBU). Alternatively, the network device may be a relay station, an access point, a vehicle-mounted device, a wearable device, a network device in a 5G network, a network device in a future evolved PLMN network, or the like, may be an access point (access point, AP), a wireless relay node, a wireless backhaul node, a transmission point (transmission point, TP), a transmission and reception point (transmission and reception point, TRP), or the like in a wireless local area network (wireless local area network, WLAN), may be a gNB or a transmission point (TRP or TP) in a new radio (new radio, NR) system, one or a group (including a plurality of antenna panels) of antenna panels of a base station in a 5G system, or may be a network node that constitutes a gNB or a transmission point. This is not limited in embodiments of this application.

In some deployments, the gNB may include a central unit (central unit, CU) and a distributed unit (distributed unit, DU). The gNB may further include an active antenna unit (active antenna unit, AAU for short). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from the information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device in embodiments of this application may alternatively be an open-radio access network (open-radio access network, O-RAN) device (open RAN, or ORAN). To be specific, the network device includes a plurality of RAN nodes, the plurality of RAN nodes cooperate to assist the terminal device in implementing radio access, and different RAN nodes separately implement a part of functions of the network device. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH). For example, in some deployments, the network device may include a central unit (central unit, CU) and a DU. In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU (open DU), the CU-CP may also be referred to as an O-CU-CP (open CU-CP), the CU-UP may also be referred to as an O-CU-UP (open CU-UP), and the RU may also be referred to as an O-RU (open RU). For ease of description, the CU, the CU-CP, the CU-UP, the DU, and/or the RU are/is used as examples/an example for description in this application. Any unit of the CU (or the CU-CP and the CU-UP), the DU, and/or the RU in this application may be implemented by using a software module, a hardware module, or a combination of a software module and a hardware module.

Optionally, for network elements in the ORAN system, the network elements may implement protocol layer functions shown in the following Table 1.

Table 1

| ORAN network element | Protocol layer function |
| --- | --- |
| O-CU-CP | RRC and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | RLC, MAC, and physical higher layer (PHY-high) |

(continued)

| ORAN network element | Protocol layer function |
|---|---|
| O-RU | Physical lower layer (PHY-low) |

It should be noted that, in the ORAN system, the network device in this application may be one or more network elements in Table 1.

Architectures of a CU and a DU of an access network device are described below. The access network device includes at least one CU and at least one DU. Optionally, the access network device further includes at least one RU.

The following uses an example in which the access network device includes one CU and one DU for description. The CU has a part of functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility function (access and mobility management function, AMF) in a 5G system. The access and mobility function network element is configured to be responsible for mobility management in a mobile network, for example, location update of a terminal device, network registration of the terminal device, and handover of the terminal device.

The CU-UP may interact with a network element that is in the core network and that is configured to implement a user plane function. The network element that is in the core network and that is configured to implement the user plane function is, for example, a user plane function (User Plane Function, UPF) in the 5G system, and is configured to be responsible for forwarding and receiving of data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of the protocol layer. For example, a part of functions of the RLC layer and a function of a protocol layer above the RLC layer are set on the CU, and remaining functions of the RLC layer and a function of a protocol layer below the RLC layer are set on the DU. For another example, functions of the CU or the DU may be obtained through division based on a service type or another system requirement. For example, division is performed based on a delay, a function whose processing time needs to satisfy a small delay requirement is set on the DU, and a function whose processing time does not need to satisfy the delay requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

It should be noted that the network device may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the network device may mean the network device, or may mean a chip, a functional module, an integrated circuit, or the like that is in the network device and that completes the method provided in this application. This is not specifically limited in this application.

For ease of understanding embodiments of this application, a communication system that may be used in embodiments of this application is first described.

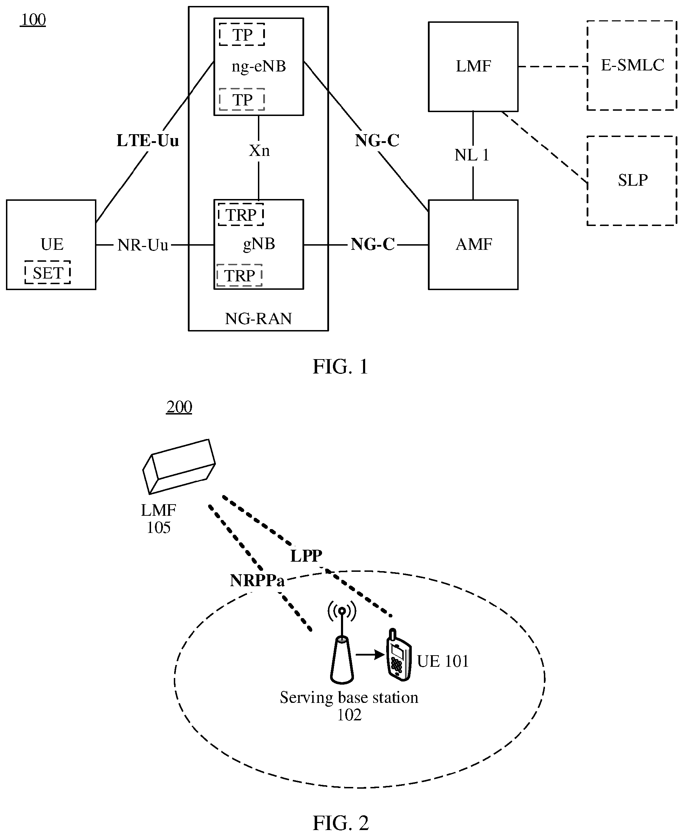

FIG. 1 is a diagram of a wireless communication system 100 applicable to an embodiment of this application. The communication system 100 includes a terminal device (represented as UE in FIG. 1), a radio access network (represented as a next generation radio access network (next generation radio access network, NG-RAN) in FIG. 1), and a core network.

The radio access network includes one or more next generation evolved NodeBs (next generation evolved NodeBs, ng-eNBs) and gNBs. The ng-eNB indicates an LTE base station that accesses a 5G core network, and the gNB indicates a 5G base station that accesses the 5G core network. Communication between the ng-eNB and the gNB, two ng-eNBs, or two gNBs is performed through an Xn interface. The Xn interface may also be referred to as an XnAP interface. The radio access network is connected to the core network through an NG-C interface.

The core network includes other functions such as an access and mobility management function (access and mobility management function, AMF) and a location management function (location management function, LMF).

The LMF is responsible for supporting different types of location services related to the UE, including positioning the UE and transmitting assistance data to the UE. The LMF may perform signal interaction with the UE and the RAN, for example, the ng-eNB or the gNB. For example, information is exchanged between the LMF and the ng-eNB or the gNB via a new radio positioning protocol annex (new radio positioning protocol annex, NRPPa) message. For example, configuration information of a positioning reference signal (positioning reference signal, PRS) or a sounding reference signal (sounding reference signal, SRS), cell timing, cell location information, and the like are obtained. For another example, UE capability information, assistance information, measurement information, and the like are transferred between the LMF and the UE via an LTE positioning protocol (LTE positioning protocol, LPP) message.

An AMF entity may receive, from a location service (location service, LCS) entity of the 5G core (5G core, 5GC) network, a location service request related to the UE, or the AMF may start some location services on behalf of specific UE, and forward the location service request to the LMF.

The terminal device is connected to the radio access network via the ng-eNB through an LTE-Uu interface. The terminal device may alternatively be connected to the radio access network via the gNB through an NR-Uu interface.

It should be further understood that the communication system 100 may include one or more terminal devices, for example, include one or more terminal device groups (for example, a UE set shown in FIG. 1). One gNB may send data or control signaling to one or more terminal devices. A plurality of gNBs may send data or control signaling to one terminal device at the same time.

Optionally, the ng-eNB and the gNB in FIG. 1 may alternatively be replaced with a TRP, a TP, a reception point (reception point, RP), a cell, or the like.

FIG. 2 is a diagram of a wireless communication system 200 applicable to an embodiment of this application. As shown in FIG. 2, the wireless communication system 200 may include at least one terminal device, for example, UE 101 shown in FIG. 2. The wireless communication system 200 may further include a plurality of network devices (for example, the network devices may be base stations (base stations, BSs) or TRPs, and the base stations are used as an example below). The plurality of base stations include a base station of a serving cell of the terminal device 101 and base stations of one or more neighboring cells of the serving cell. The base station of the serving cell (which may also be referred to as a serving base station) is 102 shown in FIG. 2, and the base stations of the neighboring cells (which may also be referred to as neighboring base stations) may include a base station 103 and a base station 104 (not shown in the figure). A plurality of antennas may be configured for both the network device and the terminal device, and the network device and the terminal device may communicate with each other by using a multi-antenna technology.

Optionally, the base station in FIG. 2 may be replaced with a TRP, a TP, an RP, a cell, or the like.

In addition to the network devices and the terminal device, the wireless communication system 200 may further include an LMF network element 105. The LMF network element 105 may be configured to implement location estimation of the terminal device. The LMF network element 105 may be deployed inside a core network. That is, the LMF network element 105 is also a core network element. The LMF network element 105 may communicate with the network device via an AMF network element (not shown in the figure). For ease of description, in embodiments of this application, that the LMF network element sends information to the network device through the AMF network element is referred to as that the LMF network element sends the information to the network device. In other words, that the LMF network element sends a message to the network device in embodiments of this application may be understood as that the LMF network element first sends the information to the AMF network element and the AMF network element forwards the information to the network device. Optionally, if there is an interface between the LMF network element and the network device, the LMF network element may directly send the information to the network device.

In some embodiments, a part of functions of the LMF network element 105, for example, a location management component (location management component, LMC), may be integrated into the network device. For example, the base station 102 of the serving cell and the base stations 103 and 104 of two neighboring cells are each integrated with the LMC. That the LMC of the LMF network element integrated into the network device sends the information to the network device may also be considered as that the LMF network element sends the information to the network device.

It should be noted that an architecture of the communication system shown in FIG. 2 is merely used as an example, and use of another architecture is not limited. For example, the base station 102 of the serving cell and the base stations 103 and 104 of the two neighboring cells are shown in FIG. 2. It is clear that the communication system 200 may further include base stations of more neighboring cells.

In the communication system 100 and the communication system 200, the LMF network element communicates with the base station via the NRPPa protocol. The LMF network element communicates with the UE via the LPP protocol. The LMF exchanges cell information with the base station via the NRPPa protocol, for example, configuration information of a reference signal of a cell, cell timing information, and geographical location information of the cell. The UE capability information, the assistance information, the measurement information, and the like are transferred between the LMF and the UE via the LPP protocol.

It should be noted that names of the network elements and interfaces in FIG. 1 and FIG. 2 are merely examples. This application does not exclude a case in which the network elements have other names and functions of the network elements are combined. With evolution of technologies, any device or network element that can implement the functions of the foregoing network elements falls within the protection scope of this application. In addition, the foregoing network elements may also be referred to as entities, devices, apparatuses, functions, modules, or the like. This is not particularly limited in this application.

It should be further noted that the foregoing network architecture used in embodiments of this application is merely an example of a network architecture described from a perspective of a conventional point-to-point architecture and a service-based architecture, a network architecture applicable to embodiments of this application is not limited thereto, and any network architecture that can implement functions of the foregoing network elements is applicable to embodiments of this application. The following explains and describes a part of terms or concepts in embodiments of this application, to facilitate understanding of a person skilled in the art.

1. Beam: electromagnetic wave radiation mode of a group of antenna systems.

2. Beamforming: technology for establishing an antenna radiation mode. Specifically, the beamforming is a processing process in which a directional electromagnetic wave radiation direction is formed by adjusting an amplitude or a phase of a signal on a radio frequency link.

3. Reference signal received power (Reference Signal Received Power, RSRP): The RSRP is for measuring power of a reference signal received by UE. The reference signal is sent by a base station and measured by the UE. A unit of the RSRP is dBm.

4. TRP: group of geographically co-located antennas (for example, antenna array having one or more antenna elements), supporting a TP function and/or an RP function.

Positioning is an important function in a mobile communication system, and requires the system to provide location information of a user in real time. Currently, target UE (target UE) may be positioned by using a positioning technology, so that a positioning initiator that initiates a positioning service obtains location information of the target UE. The positioning initiator may be an LCS, UE, an AMF network element, or the like. For example, the LCS requests a serving AMF of the target UE to position the target UE; the serving AMF of the target UE decides to position the target UE; or the target UE requests a positioning service from the serving AMF of the target UE, for example, initiates a request due to positioning or transmission of assistance information. After the positioning service is triggered, an LMF further performs a positioning-related operation. The LMF needs to interact with the base station, for example, obtain assistance information related to air interface positioning. The LMF further needs to interact with the target UE, for example, perform a capability transmission procedure, including obtaining a positioning capability of UE, providing positioning-related assistance information for the UE, and the like.

In existing positioning, the target UE may send and/or receive a position-related reference signal for positioning, and the target UE is positioned by using a positioning method supported in NR and LTE. For example, the positioning-related reference signal includes a PRS and/or an SRS, where the PRS is a downlink signal, and the SRS is an uplink signal.

Currently, the positioning method includes an uplink positioning method and a downlink positioning method. In the uplink positioning method, the positioning-related reference signal (for example, the SRS) is sent on an uplink, and a base station end performs location resolving. Typical positioning methods include an uplink-time difference of arrival (uplink-time difference of arrival, UL-TDOA) and an uplink-angle of arrival (uplink-angle of arrival, UL-AOA). In the two positioning methods, the base station measures time differences of arrival (TDOA) or angles of arrival (AOA), of positioning-related signals sent by the UE, at base stations of a plurality of cells, to determine a location of the UE. Correspondingly, in the downlink positioning method, the positioning-related reference signal (for example, the PRS) is sent on a downlink, and a terminal performs location resolving. A typical positioning method includes a downlink-time difference of arrival (downlink-time difference of arrival, DL-TDOA). The following uses downlink positioning as an example to describe a basic procedure of the downlink positioning in detail.

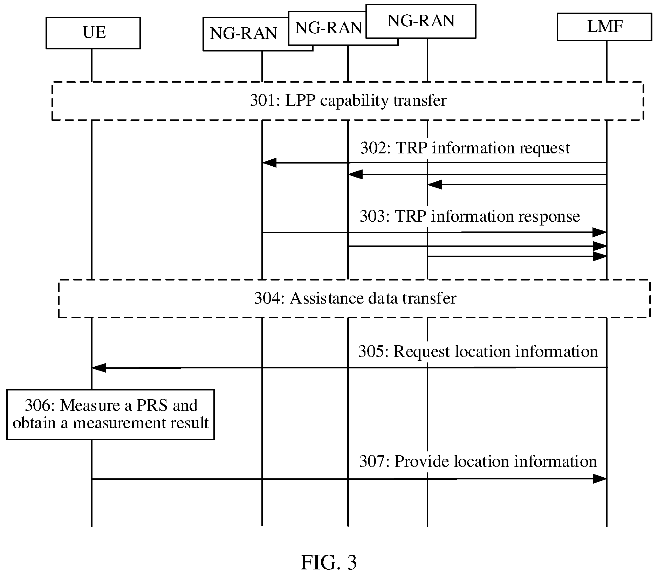

FIG. 3 is a diagram of a basic procedure of downlink positioning. As shown in FIG. 3, the downlink positioning procedure includes the following steps.

301: An LMF obtains a UE capability through an LPP capability transfer (LPP capability transfer) process.

The UE capability may include a capability of UE to process downlink (downlink, DL) reference signals (reference signals, RSs). For ease of description, an example in which the downlink reference signal is a PRS is used for description in the procedure.

302: The LMF sends a TRP information request (TRP information request) to a plurality of NG-RAN nodes. Correspondingly, the NG-RAN nodes receive the TRP information request.

The TRP information request may be used to request TRP information of a TRP. For example, the TRP information may include at least one of the following: cell information, coordinates, a TRP ID of an NG-RAN TRP, a PRS configuration, and the like. The PRS configuration may include a time domain resource configuration of the PRS, a frequency domain resource configuration of the PRS, and the like. For example, the time domain resource configuration of the PRS includes a periodicity of the PRS, a slot offset (slot offset), and the like, which are not enumerated one by one herein. The frequency domain resource configuration of the PRS may include a frequency, a comb size (comb size), and the like, which are not enumerated one by one herein.

303: The NG-RAN node sends a TRP information response (TRP information response) to the LMF. Correspondingly, the LMF receives the TRP information response.

It may be understood that the TRP information response is used to respond to the TRP information request. The TRP information response may carry information requested by the LMF.

304: The LMF provides the UE with assistance data needed for measurement and/or calculation through an assistance data transfer (assistance data transfer) procedure. The assistance data may include cell information, PRS configurations, and the like of a plurality of TRPs.

305: The LMF sends request location information (Request Location Information) to the UE, and the UE receives the request location information.

The request location information may be used to request the UE to measure the PRS to obtain a corresponding measurement quantity or a location estimation result. For example, in a DL-TDOA positioning technology, the LMF may request the UE to measure a downlink reference signal time difference (downlink reference signal time difference, DL RSTD) of arrival by using the request location information.

306: The UE measures the PRS and obtains a measurement result.

307: The UE sends provide location information (Provide Location Information) to the LMF, and reports the measurement quantity or the location estimation result to the LMF. Correspondingly, the LMF receives the provide location information.

Optionally, the UE supports positioning in different modes. For example, the LMF calculates location information of target UE. This may be referred to as an LMF-based mode or a UE-assisted mode. For another example, the target UE calculates the location information of the target UE. This may be referred to as a UE-based mode.

For example, if a DL-TDOA positioning method is LMF-based, the target UE needs to report, to the LMF, DL RSTDs obtained by the target UE by measuring PRSs from a plurality of base stations, and the LMF calculates the location information of the target UE based on the DL RSTDs reported by the UE.

For example, if the DL-TDOA positioning method is UE-based, the target UE may calculate the location information of the target UE based on the DL RSTDs obtained by measuring the PRSs from the plurality of base stations and based on assistance information provided by a network side. In addition, the location information of the UE may be provided for the LMF by using a message for providing location information.

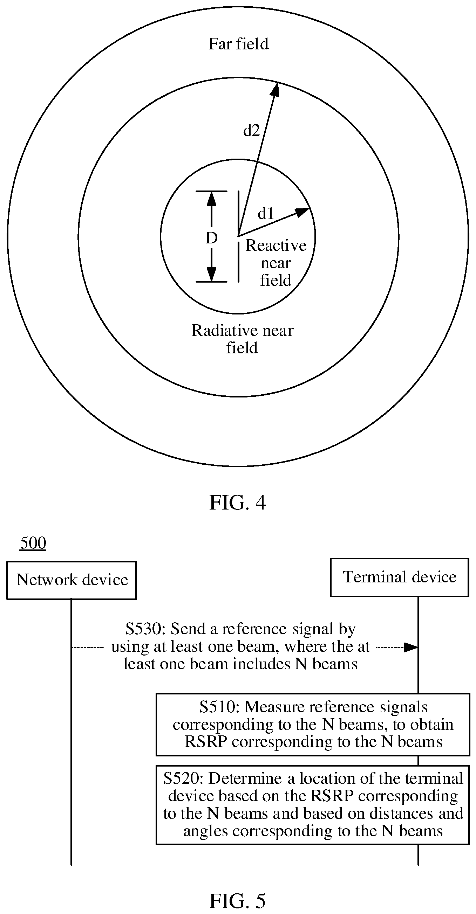

The following describes near-field communication in this application. When an antenna radiates a radio signal in free space, an electromagnetic diffraction domain of the radio signal may be classified into a reactive near-field region, a radiative near-field region, and a far-field region based on a radiation feature of the radio signal in the free space. FIG. 4 is a diagram of each region. Communication radii corresponding to the reactive near-field region and the radiative near-field region are respectively d1 and d2.

Optionally, a near-field communication range described in this application may be the radiative near-field region. For example, the near-field communication range may be generally determined according to a formula (1), but is also related to a specific channel model and the like. A formula used to calculate the communication radius of the radiative near-field region is not limited in this application.

$$d2 = \frac{2D^2}{\lambda} \qquad (1)$$

D is a maximum geometric size of the antenna, and $\lambda$ is a wavelength of an electromagnetic wave.

Optionally, the near-field communication range described in this application may be a specified or configured range. For example, a region whose communication radius is d3 may be specified as the near-field communication range. d3 may be specified in a protocol or configured by a network side. This is not limited in this application.

As an antenna panel becomes larger and a communication frequency band becomes higher, a near-field communication range of a base station may be further expanded. For example, a communication radius may reach tens of meters or even hundreds of meters. Therefore, near-field communication becomes possible in the future. A positioning method in far-field communication is generally based on a plane wave (plane wave) assumption, and an equiphase surface of a plane wave is a plane. However, the plane wave assumption is not true in a near field. In the near-field communication, modeling needs to be performed based on a spherical wave (spherical wave) model, and an equiphase surface in an electromagnetic wave propagation process is a spherical surface. Because an existing positioning technology is based on the plane wave assumption in the far-field communication, and when UE is located in the near-field range, the existing positioning technology is no longer applicable, how to implement positioning of the UE in the near-field communication range becomes an urgent problem to be resolved.

In view of this, this application provides a near-field positioning method, to effectively resolve the foregoing technical problem. The following describes in detail the positioning method in near-field communication provided in this application.

FIG. 5 is a schematic flowchart of a near-field positioning method 500 according to this application. The method is applicable to downlink positioning, and in the method, a target terminal device calculates location information of the target terminal device (that is, UE-based). The method includes the following steps.

S510: The terminal device measures N reference signals corresponding to N beams from a network device, to obtain RSRP corresponding to the N beams, where N is a positive integer.

It may be understood that the method is applied to near-field communication. Therefore, the N beams each are a beam formed by a spherical wave. In this application, a beam formed by a spherical wave indicates that an electromagnetic wave signal is based on a spherical wave assumption. For example, a beam in the near-field communication may also be referred to as a spherical wave beam, a near-field beam, or the like. A specific name is not limited in this application.

It may be further understood that the N reference signals are N reference signals respectively sent by the network device on N reference signal resources, each reference signal corresponds to one beam, and the terminal device measures the N reference signals to obtain N pieces of RSRP.

It may be further understood that the foregoing obtained N pieces of RSRP are in one-to-one correspondence with the measured N reference signals, and the N reference signals are in one-to-one correspondence with the N beams. Therefore, the N beams are in one-to-one correspondence with the N pieces of RSRP. For example, the network device sends a reference signal #1 on a reference signal resource #1, the reference signal #1 corresponds to a beam #1, and the terminal device measures the reference signal #1 to obtain RSRP #1. In this embodiment of this application, the RSRP #1 may also be referred to as RSRP corresponding to the beam #1, RSRP corresponding to the reference signal resource #1, or RSRP corresponding to the reference signal #1.

Optionally, a reference signal may be a PRS, or may be another reference signal that can be used for positioning. This is not limited in this application.

Optionally, before S510, the method further includes: S530: The network device sends the reference signal to the terminal device by using at least one beam. Correspondingly, the terminal device receives, from the network device, the reference signal corresponding to the at least one beam. Similarly, the method is applied to the near-field communication. Therefore, the at least one beam is a beam formed by the spherical wave. In this case, in S510, that the terminal device measures the reference signals corresponding to the N beams from the network device, to obtain the RSRP corresponding to the N beams includes: The terminal device measures a reference signal corresponding to at least one beam, to obtain RSRP corresponding to the at least one beam, where the at least one beam includes the N beams.

S520: The terminal device determines a location of the terminal device based on the RSRP corresponding to the N beams and based on distances and angles corresponding to the N beams. A distance corresponding to a first beam is a distance between a center location of the first beam and a reference antenna of the network device, an angle corresponding to the first beam is an angle of the center location of the first beam relative to the reference antenna, and the first beam is any one of the N beams.

For example, the center location of the first beam is also referred to as an energy convergence center of the first beam, that is, a highest energy point of the first beam.

It may be understood that the distance corresponding to the first beam may be a distance between the center location of the first beam and a location corresponding to the reference antenna. For example, the location corresponding to the reference antenna may be a location corresponding to a point on the reference antenna, or the location corresponding to the reference antenna may be a virtual location corresponding to the reference antenna. This is not limited in this application.

For example, if the network device is an O-RAN device, S530 may be implemented by a DU and/or an RU.

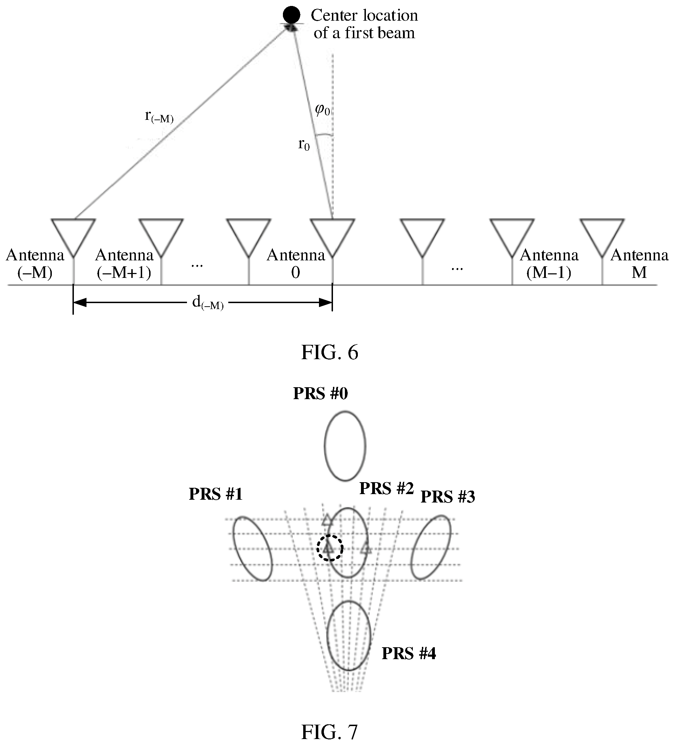

The following specifically describes the distance and the angle that correspond to the first beam with reference to FIG. 6. For example, as shown in FIG. 6, an antenna panel of the network device includes (2M+1) antennas, where M is a natural number, and numbers of the (2M+1) antennas are sequentially an antenna (-M), an antenna (-M+1), ..., an antenna 0, ..., an antenna (M-1), and an antenna M. For example, the reference antenna is the antenna 0. The center location of the first beam is shown in the figure. $r_0$ is a straight-line distance between the center location of the first beam and the antenna 0, and $\varphi_0$ is the angle of the center location of the first beam relative to the reference antenna. For example, in FIG. 6, $\varphi_0$ is an included angle between a direction of a connection line between the antenna 0 and the center location of the first beam and a direction perpendicular to the antenna 0. For example, the direction perpendicular to the antenna 0 is 0 degrees. A direction to the left is positive and a direction to the right is negative, or vice versa.

It may be understood that, during beamforming, a beamforming vector corresponding to the first beam is shown in a formula (2):

$$a(\mathrm{r}_0, \varphi_0) = \left[ e^{jk(r_{-M}-r_0)}, e^{jk(r_{-M+1}-r_0)}, \ldots 1, \ldots, e^{jk(r_{M-1}-r_0)}, e^{jk(r_M-r_0)} \right] \quad (2)$$

$k = 2\pi/\lambda$, and $\lambda$ is an electromagnetic wave wavelength. $r_m$ represents a straight-line distance between the center location of the first beam and an antenna m, and $r_m$ ($-M \leq m \leq M$, where m is a natural number) may be obtained according to the following formula (3):

$$r_m^2 = (d_m)^2 + r_0^2 - 2d_m * r_0 * \sin \varphi_0 \quad (3)$$

$d_m$ is a distance between the antenna m and the antenna 0. For example, as shown in FIG. 6, a distance between the antenna (-M) and the antenna 0 is $d_{(-M)}$, and a straight-line distance between the center location of the first beam and the antenna (-M) is $r_{(-M)}$.

It may be understood that the beamforming vector of the first beam in a near field may be represented by using ($r_0$, $\varphi_0$) corresponding to the first beam, and the distance and the angle that correspond to the first beam and that are described in this application may correspond to ($r_0$, $\varphi_0$) in the beamforming of the first beam. For example, the at least one beam may be from a same network device, or may be from different network devices. However, it should be noted that if the at least one beam is from the same network device (for example, a network device #1), a distance and an angle that correspond to any one of the at least one beam are a distance and an angle that are relative to a same reference antenna of the network device #1. If the at least one beam is from different network devices, for example, the at least one beam includes eight beams, where a beam #1 to a beam #4 are from the network device #1, and a beam #5 to a beam #8 are from a network device #2, a distance and an angle that correspond to any one of the beam #1 to the beam #4 are a distance and an angle that are relative to a same reference antenna of the network device #1, and a distance and an angle that correspond to any one of the beam #5 to the beam #8 are a distance and an angle that are relative to a same reference antenna of the network device #2. For ease of description, an example in which received beams are from a same network device is used for description in all descriptions in the following.

It may be understood that the N beams that are finally used to determine the location of the terminal device are N beams selected from the at least one beam based on different near-field positioning implementations. The following provides two possible near-field positioning implementations.

Implementation 1: The terminal device determines the location of the terminal device based on a distance and an angle that correspond to a beam with largest RSRP in the at least one beam (that is, N=1).

It may be understood that, in the method, the location determined based on the distance and the angle that correspond to the beam with the largest RSRP is a center location of the beam with the largest RSRP. In other words, in the method, the center location of the beam with the largest RSRP is used as the location of the terminal device. The following uses an example for description.

For example, if there are three beams in an area in which the terminal device is located, the three beams are respectively a beam 1, a beam 2, and a beam 3, the three beams respectively correspond to a reference signal 1, a reference signal 2, and a reference signal 3, the terminal device measures reference signals corresponding to the three beams to obtain three pieces of RSRP, where the three pieces of RSRP are RSRP 1 corresponding to the beam 1, RSRP 2 corresponding to the beam 2, and RSRP 3 corresponding to the beam 3, and the terminal device determines the RSRP 1 as a largest RSRP value, the terminal device determines the location of the terminal device based on a distance and an angle that correspond to the beam 1. Based on Implementation 1, the terminal device considers a center location of the beam 1 as a location estimation result.

Optionally, in Implementation 1, the terminal device may alternatively select, from the at least one beam, any beam with RSRP greater than an RSRP threshold, and estimate the location of the terminal device based on a distance and an angle that are of the selected beam. It may be understood that a center location of the selected beam is an estimated location of the terminal device. For example, the threshold may be determined by the terminal device, specified in a protocol, or configured by a network side.

The positioning method can implement downlink single-station positioning in the near field, and measurement calculation is simple. The positioning method is applicable to a positioning service that does not have a high positioning accuracy requirement in a near-field range. For a positioning service that has a high positioning accuracy requirement, this application provides another positioning method, to improve positioning accuracy. For details, refer to implementation 2.

Implementation 2: The terminal device measures the N reference signals (N is greater than 1) corresponding to the N beams, to obtain the N pieces of RSRP corresponding to the N beams, and the terminal device determines the location of the terminal device based on relative values of the N pieces of RSRP and the distances and angles corresponding to the N beams.

The relative values of the N pieces of RSRP represent ratios of the N pieces of RSRP to reference RSRP, and the reference RSRP is a value of one of the N pieces of RSRP. For example, a reference signal resource corresponding to the reference RSRP is referred to as a reference resource, a beam corresponding to the reference RSRP is referred to as a reference beam, or a reference signal corresponding to the reference RSRP is referred to as a reference signal.

Optionally, the N beams are beams corresponding to RSRP ranking first N in the at least one beam. For example, as shown in FIG. 7, an example in which the network device sends a reference signal PRS is used. The network device sends a PRS #0, a PRS #1, a PRS #2, a PRS #3, and a PRS #4 respectively on a PRS resource #0, a PRS resource #1, a PRS resource #2, a PRS resource #3, and a PRS resource #4 in the near-field range, each PRS corresponds to one beam (one beam is one ellipse in the figure), the PRS #0 to the PRS #4 respectively correspond to the beam #0 to the beam #4, and the terminal device may obtain, through measurement, RSRP corresponding to the PRS #0 to the PRS #4. If N=3, the terminal device selects, from the beam #0 to the beam #4, beams corresponding to RSRP ranking first three, to estimate the location of the terminal device. It is assumed that the beams corresponding to the RSRP ranking first three in the beam #0 to the beam #4 are sequentially the beam #2, the beam #1, and the beam #3. In this case, the terminal device may determine the location of the terminal device based on relative strengths of RSRP corresponding to the beam #2, the beam #1, and the beam #3, and distance information and angle information that correspond to the beam #2, the beam #1, and the beam #3. For example, the reference RSRP may be RSRP corresponding to a beam corresponding to a largest RSRP value. That is, the reference RSRP may be RSRP corresponding to the beam #2.

Optionally, the N beams are any N beams with RSRP greater than an RSRP threshold in the at least one beam. The threshold may be determined by the terminal device, specified in a protocol, or configured by a network side. How to select the N beams is not limited in this application.

Based on Implementation 2, the following provides a possible specific positioning method. For ease of description, an example in which the terminal device receives reference signals from a same network device, where the reference signals are PRSs, and selects N pieces of largest RSRP from the RSRP corresponding to the at least one received beam is used for description. The following describes the positioning method in detail.

The N pieces of RSRP used by the terminal device to calculate the location of the terminal device are sequentially $p_0, p_1, p_2, \ldots,$ and $p_{N-1}$ in descending order, $p_0, p_1, p_2, \ldots,$ and $p_{N-1}$ are respectively obtained by measuring the PRS #1, the PRS #2, ..., and a PRS #(N-1), and the corresponding N beams are sequentially the beam #0, the beam #1, the beam #2, ..., and a beam #(N-1). In this case, the terminal device may estimate the location of the terminal device according to a formula (4):

$$(\hat{r}_0, \hat{\varphi}_0) = \arg \max_{(r_0, \varphi_0)} corr\left(\left[\frac{p_1}{p_0}, \frac{p_2}{p_0}, \ldots, \frac{p_{N-1}}{p_0}\right]^{\mathrm{T}}, \left[\frac{\beta^H a_1}{\beta^H a_0}, \frac{\beta^H a_2}{\beta^H a_0}, \ldots, \frac{\beta^H a_{N-1}}{\beta^H a_0}\right]\right) \quad (4)$$

In the formula (4), $(r_0, \varphi_0)$ marks a distance and an angle that are of any location relative to the reference antenna. It may be understood that an objective of the foregoing formula is to resolve a target location corresponding to the terminal device. A distance and an angle that correspond to the target location are $(\hat{r}_0, \hat{\varphi}_0)$, and a maximum value of an expression $corr\left(\left[\frac{p_1}{p_0}, \frac{p_2}{p_0}, \ldots, \frac{p_{N-1}}{p_0}\right]^{\mathrm{T}}, \left[\frac{\beta^H a_1}{\beta^H a_0}, \frac{\beta^H a_2}{\beta^H a_0}, \ldots, \frac{\beta^H a_{N-1}}{\beta^H a_0}\right]\right)$ in the formula (4) can be obtained by using $(\hat{r}_0, \hat{\varphi}_0)$.

In the formula (4), $\left[\frac{p_1}{p_0}, \frac{p_2}{p_0}, \ldots, \frac{p_{N-1}}{p_0}\right]$ represents ratios of RSRP corresponding to different beams measured by the terminal device at a current location, where $p_0$ is the reference RSRP.

In the formula (4), $a_i$ $(0 \leq i \leq N-1)$ is a beamforming vector corresponding to a beam #i in the beam #0 to the beam #(N-1). FIG. 6 is used as an example. The reference antenna is 0. It is assumed that a distance and an angle that are of a center location of the beam #i $(0 < i < N-1)$ in the beam #0 to the beam #(N-1) relative to the reference antenna 0 are respectively $(r_{i,0}, \varphi_{i,0})$, and the beamforming vector $a_i$ of the beam #i is shown in a formula (5):

$$a_i = \left[e^{jk(r_{i,-M}-r_{i,0})}, e^{jk(r_{i,-M+1}-r_{i,0})}, \ldots 1, \ldots, e^{jk(r_{i,M-1}-r_{i,0})}, e^{jk(r_{i,M}-r_{i,0})}\right]^{\mathrm{T}} \quad (5)$$

$k=2\pi/\lambda$, $\lambda$ is the electromagnetic wave wavelength, and T represents transposition. $r_{i,-M}, r_{i,-M+1}, \ldots, r_{i,0} \ldots, r_{i,M-1}$, and $r_{i,M}$ sequentially represent straight-line distances between a center location of a beam i and the antenna (-M), the antenna (-M+1), ..., the antenna 0, ..., the antenna (M-1), and the antenna M. As shown in FIG. 6, according to the cosine theorem, $r_{i,m}$ (-M≤m≤M, and m is a natural number) may be obtained according to the following formula (6):

$$r_{i,m}^2 = (d_m)^2 + r_{i,0}^2 - 2d_m * r_{i,0} * \sin\varphi_{i,0} \quad (6)$$

$d_m$ is the distance between the antenna m and the antenna 0.

In the formula (4), it is assumed that a distance and an angle that are of the current location of the terminal device relative to the reference antenna are $(r_0, \varphi_0)$. $\beta$ may be defined, and $\beta$ is shown in the formula (7):

$$\beta = \left[e^{jk(r_{-M}-r_0)}, e^{jk(r_{-M+1}-r_0)}, \dots 1, \dots, e^{jk(r_{M-1}-r_0)}, e^{jk(r_M-r_0)}\right]^{\mathrm{T}} \quad (7)$$

$\beta^H a_0$ is used as an example. $\beta^H a_0$ represents a field strength value or an antenna gain of the PRS #0 at the location, in other words, an RSRP theoretical value obtained by the terminal device by measuring the PRS #0 at the location. H represents conjugate transposition. Meanings of other parameters are similar. Details are not described herein again. Therefore, an element $\dfrac{\beta^H a_i}{\beta^H a_k}$ in $\left[\dfrac{\beta^H a_1}{\beta^H a_0}, \dfrac{\beta^H a_2}{\beta^H a_0}, \dots, \dfrac{\beta^H a_{N-1}}{\beta^H a_0}\right]$ represents a field strength ratio or an antenna gain ratio of a PRS #i and a PRS #k at the location, in other words, RSRP theoretical ratios of the PRS #i and the PRS #k obtained by the terminal device through measurement at the location.

It may be understood that the terminal device may traverse (or search for) a plurality of locations according to the formula (2) to obtain $(\hat{r}_0, \hat{\varphi}_0)$. In this application, which locations in the near-field communication range are traversed and how to determine the traversed locations are not specifically limited. For example, the terminal device may traverse all grid points provided in FIG. 7. A location of a triangle circled by a dashed circle in the figure is a finally estimated location of the terminal device, and a distance and an angle that are of the triangle relative to the reference antenna are $(\hat{r}_0, \hat{\varphi}_0)$.

The foregoing describes in detail the two possible positioning implementations, and the following continues to describe another procedure related to the method.

Optionally, before the terminal device performs positioning measurement, the method further includes: An LMF sends a first request message to the terminal device, where the first request message is used to request the terminal device to perform positioning measurement. Correspondingly, the terminal device receives the first request message from the LMF. Then, in S520, the terminal device determines the location of the terminal device based on the foregoing positioning implementation, and then the terminal device sends a response to the first request message to the LMF, where the response to the first request message includes the location information of the terminal device. Correspondingly, the LMF receives the response to the first request message from the network device.

For example, the first request message may be the request location information (Request Location Information) in 305 in FIG. 3, and the response to the first request message may be the provide location information (Provide Location Information) in S307 in FIG. 3.

It can be learned from the foregoing that, after a positioning service is triggered, before the terminal device measures the reference signal, the LMF needs to further perform a positioning-related operation. For example, the LMF needs to interact with the network device, for example, obtain assistance information related to air interface positioning. The LMF further needs to interact with the target terminal device, for example, perform a capability transmission procedure, including obtaining a positioning capability of the terminal device, providing positioning-related assistance information for the terminal device, and the like. The positioning-related operation further performed by the LMF in near-field positioning is described in the following method 800. Details are not described herein.

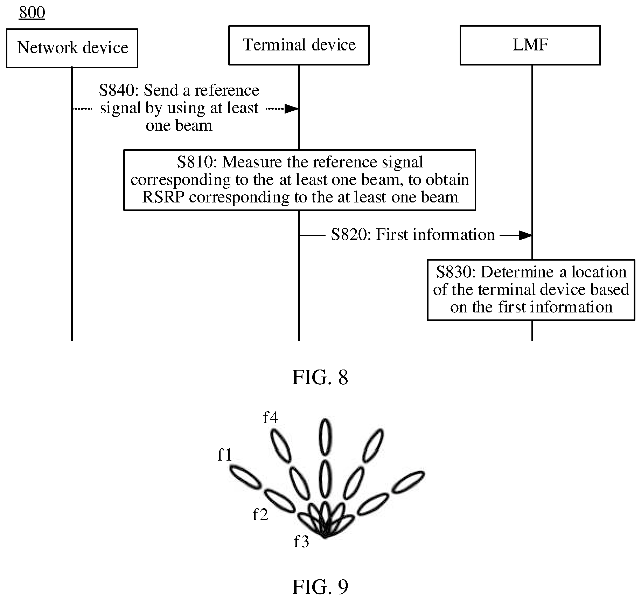

FIG. 8 is a schematic flowchart of a near-field positioning method 800 according to this application. The method is applicable to downlink positioning, and in the method, an LMF calculates location information of a target terminal device (that is, LMF-based). A difference between the method 800 and the method 500 lies in that in the method 800, the target terminal device only needs to measure a reference signal to obtain a measurement value, and sends the measurement value to a network device, and the network device determines the location information of the target terminal device based on the measurement value. The method includes the following steps.

S810: A terminal device measures at least one reference signal corresponding to at least one beam from the network device, to obtain RSRP corresponding to the at least one beam.

It may be understood that the method is applied to near-field communication. Therefore, the at least one beam is a beam formed by a spherical wave.

Optionally, before S810, the method further includes: S840: The network device sends the at least one reference signal to the terminal device by using the at least one beam. Correspondingly, the terminal device receives, from the network device, the at least one reference signal corresponding to the at least one beam.

For a correspondence between the reference signal, a reference signal resource, and the beam, refer to the descriptions in S510. Details are not described herein again.

For example, the at least one beam may be from a same network device, or may be from different network devices. For details, refer to the descriptions in S520. Details are not described herein again.

S820: The terminal device sends first information to the LMF. Correspondingly, the LMF receives the first information from the terminal device.

Example 1: The first information indicates a reference signal resource corresponding to a beam with largest RSRP. For example, the first information may specifically include an identifier of the reference signal resource corresponding to the beam with the largest RSRP in the at least one beam.

It may be understood that the beam with the largest RSRP herein may be the beam with the largest RSRP in the at least one beam, or may be any beam with RSRP greater than an RSRP threshold in the at least one beam. This is not limited in this application. For specific descriptions, refer to the descriptions in Implementation 1 in S520. Details are not described herein again.

Optionally, the first information may further include an RSRP value corresponding to the beam with the largest RSRP.

Example 2: The first information indicates relative values of N pieces of RSRP corresponding to N beams. For example, the first information may further include identifiers of reference signal resources corresponding to N beams in the at least one beam, and one identifier indicates one reference signal resource.

The relative values of the N pieces of RSRP represent ratios of the N pieces of RSRP to RSRP corresponding to a reference beam, the reference beam is any one of the N beams, and N is a positive integer. Refer to the descriptions in S520. Details are not described herein again.

Example 3: The first information indicates reference signal resources corresponding to N beams in the at least one beam and RSRP corresponding to the N beams, where N is a positive integer. For example, the first information may specifically include identifiers of reference signal resources corresponding to N beams in the at least one beam and the RSRP corresponding to the N beams.

S830: The LMF determines the location of the terminal device based on the first information. The following describes, with reference to a specific example of the first information, how the LMF determines the location of the terminal device.

In Example 1, the LMF estimates the location of the terminal device based on a distance and an angle that correspond to the beam with the largest RSRP. For details, refer to the descriptions in Implementation 1 in S520. Details are not described herein again.

In Example 2, the LMF determines the location of the terminal device based on the ratios of the RSRP corresponding to the N beams to the RSRP corresponding to the reference beam, and distance and angle information that correspond to the N beams. For example, the LMF may traverse $(r_0, \varphi_0)$ corresponding to different locations according to the formula (2), to estimate the location of the terminal device. For specific descriptions, refer to the descriptions in Implementation 2 in S520. Details are not described herein again.

In Example 3, the terminal device may directly send the RSRP corresponding to the N beams to the LMF, and the LMF determines the ratios of the RSRP corresponding to the N beams to the RSRP corresponding to the reference beam. Then, the LMF determines the location of the terminal device based on the ratios of the RSRP corresponding to the N beams to the RSRP corresponding to the reference beam, and the distance and angle information that correspond to the N beams. For specific descriptions, refer to the descriptions in Implementation 2 in S520. Details are not described herein again.

Optionally, before S810, the method further includes: The LMF sends a first request message to the terminal device, where the first request message is used to request the terminal device to perform positioning measurement. Correspondingly, the terminal device receives the first request message from the LMF. Then, the terminal device determines the first information. For example, in S820, the terminal device sends a response to the first request message to the LMF, where the response to the first request message includes the first information. Correspondingly, the LMF receives the response to the first request message from the network device.

For example, the first request message may be the request location information (Request Location Information) in 305 in FIG. 3, and the response to the first request message may be the provide location information (Provide Location Information) in S307 in FIG. 3.

For example, if the network device is an O-RAN device, S840 may be implemented by a DU and/or an RU.

The following describes how the LMF needs to further perform a positioning-related operation procedure after the positioning service is triggered and before the terminal device measures the reference signal in the method 500 and the method 800.

Optionally, the method 500 and the method 800 may further include: The LMF sends information #1 to the terminal device. Correspondingly, the terminal device receives the information #1 from the LMF. The information #1 includes at least one of the following parameters:

(1) Identifier of at least one reference signal resource. The at least one reference signal resource may be the at least one reference signal resource corresponding to the at least one beam in the method 500 and the method 800. Each reference signal resource corresponds to a unique identifier of the reference signal resource.

For example, if the reference signal is the PRS, an identifier of the reference signal may be a PRS resource set identifier (PRS resource set ID) and/or a PRS resource identifier (PRS resource ID).

(2) Configuration information of at least one reference signal. For example, configuration information of the reference signal resource includes configuration information such as time domain configuration information and frequency domain configuration information.

(3) Distance information and angle information corresponding to any one of the at least one beam in the method 500 and the method 800.

(4) Relative field strength values of the at least one reference signal corresponding to the at least one beam in the method 500 and the method 800 at a plurality of locations corresponding to a plurality of first combinations. The first combination includes a first distance and a first angle. The first distance and the first angle may be used to determine a first location. The first distance and the first angle are a distance and an angle that are of the first location relative to the reference antenna of the network device. For example, the first combination includes $(r_0, \varphi_0)$, where the first distance is $r_0$, and the first angle is $\varphi_0$.

For example, the at least one reference signal includes a reference signal #i and a reference signal #k, and a relative field strength ratio between the reference signal #i and the reference signal #k that correspond to the first location corresponding to the first combination may be represented as $\frac{\beta^H a_\mathrm{i}}{\beta^H a_\mathrm{k}}$. For specific meanings of parameters in $\frac{\beta^H a_\mathrm{i}}{\beta^H a_\mathrm{k}}$, refer to the descriptions in the formula (7). Details are not described herein again. It may be understood that when the parameter (4) includes $\frac{\beta^H a_\mathrm{i}}{\beta^H a_\mathrm{k}}$, the parameter (4) further includes an identifier of a reference signal resource #i corresponding to the reference signal #i.

For example, the parameter (4) further includes an identifier of a reference signal resource #k corresponding to the reference signal #k.

For example, because the method 800 is LMF-based, the information #1 may not need to carry a related parameter used to calculate the location of the terminal device. For example, the information #1 does not need to carry the parameter (3) and the parameter (4) in the information #1. This is not limited in this application.

For example, the information #1 may also be referred to as assistance information. For example, the information #1 may be assistance data transfer (assistance data transfer) in 304 in FIG. 3, or the information #1 may be the provide assistance information (Provide Assistance Information).

Optionally, before the LMF sends the information #1 to the terminal device, the method 500 and the method 800 may further include: The LMF sends a second request message to the network device, where the second request message is used to request the information #1. Correspondingly, after receiving the second request message from the LMF, the network device sends a second request response message to the LMF, where the second request response message includes the information #1. Correspondingly, the LMF receives the second request response message from the network device.

For example, the second request message may be the TRP information request (TRP information request) in 302 in FIG. 3, and the second request response message may be the TRP information response (TRP information response) in S303 in FIG. 3.

Optionally, before the LMF sends the second request message to the terminal device, the method 500 and the method 800 may further include: The LMF obtains near-field positioning capability information from the terminal device, for example, whether the terminal device supports near-field positioning and a supported positioning technology.

For example, the LMF obtains a UE capability by using the LPP capability transfer (LPP capability transfer) process in 301 in FIG. 3, and the UE capability includes near-field positioning capability information of the UE.

In addition, in the method 500 and the method 800, the network device may send, to the terminal device, a plurality of beams used for positioning. When resources are limited, the plurality of beams may be sent in a time division manner. This may increase a positioning delay or reduce positioning accuracy and real-time performance. Therefore, in this application, the foregoing problem can be resolved through frequency division. Specifically, reference signal resources corresponding to different reference signals described above may be divided into a plurality of frequency domain units in frequency domain. The network device may separately send corresponding reference signals on a resource corresponding to a plurality of frequency domain units, and reference signal resources corresponding to all frequency domain units correspond to different beams. More specifically, the frequency domain unit may be a subcarrier, a resource block (resource block, RB), or the like. When measuring the reference signal, the terminal device may consider a frequency domain unit with strongest measured energy as a frequency domain unit corresponding to the reference signal resource, so that the terminal device may determine and/or report an identifier of the frequency domain unit.

As shown in FIG. 9, one ellipse in the figure is one beam, and different beams in the figure correspond to different frequency domain units. $f_i$ identifies a center frequency of the frequency domain unit i. For example, in FIG. 9, a frequency domain unit 1 corresponding to $f_1$, a frequency domain unit 2 corresponding to $f_2$, and a frequency domain unit 3 corresponding to $f_3$ form beams at different distances in a same direction.

For example, the network device may form different beams in different frequency domain units in a digital precoding manner or in a manner of analog precoding with delayers (true time delayers, TTDs). A specific implementation is not limited in this application.

Optionally, based on the foregoing descriptions of sending the beam through frequency division, that the network device sends the reference signal to the terminal device described in the method 500 and the method 800 includes: The network device sends reference signals to the terminal device on different frequency domain units of at least one reference signal resource. Correspondingly, the terminal device receives the reference signals from the network device on different frequency domain units of the at least one reference signal resource.

That the network device sends the reference signals to the terminal device on different frequency domain units of the at least one reference signal resource is described by using an example. For example, the reference signal is the PRS. A frequency domain resource of the PRS resource #1 includes a frequency domain unit #1 and a frequency domain unit #2, and a frequency domain resource of the PRS resource #2 includes a frequency domain unit #3 and a frequency domain unit #4. In this case, the network device may send a PRS #1-1 and a PRS #1-2 to the terminal device on the frequency domain unit #1 and the frequency domain unit #2 that correspond to the PRS resource #1, and the network device sends the PRS #2-1 and the PRS #2-2 to the terminal device on the frequency domain unit #3 and the frequency domain unit #4 that correspond to the PRS resource #2.

For example, based on a case in which the network device sends the reference signals on different frequency domain units, the information #1 may further include at least one of the following:

(5) Identifier of the frequency domain unit.

When a frequency domain resource of the reference signal resource corresponding to the identifier of the reference signal resource indicated by the parameter (1) in the information #1 can be divided into a plurality of frequency domain units, the network device may send the reference signals on a resource corresponding to different frequency domain units, and each reference signal corresponds to one beam. It may be understood that, in this case, the network device may allocate the identifier in the parameter (1) to a resource corresponding to each frequency domain unit, that is, the identifier of the frequency domain unit, that is, the identifier corresponding to the reference signal resource in the parameter (1). In another method, in addition to the identifier in the parameter (1), the network device may further allocate a new identifier to the resource corresponding to each frequency domain unit. For example, when the frequency domain unit is the subcarrier, a subcarrier sequence number may be used as the identifier.

(6) Configuration information of the resource corresponding to different frequency domain units.

It should be understood that different frequency domain units are frequency domain units corresponding to any one of the at least one reference signal resource.

For example, if the frequency domain unit #1 is any one of at least one frequency domain unit corresponding to the reference signal resource #1, resource information corresponding to the frequency domain unit #1 may include a center frequency of the frequency domain unit #1, and/or an offset of the center frequency of the frequency domain unit #1 relative to a center frequency of the reference signal resource #1.

(7) The PRS #1-1 is used as an example. If the PRS #1-1 is sent on the frequency domain unit #1 corresponding to the reference signal resource #1, the information #1 may further include an identifier of the frequency domain unit #1. For example, if $B_{i,j}$ is used to represent a beam corresponding to a reference signal sent on a subcarrier #j of the reference signal resource #i, in addition to the relative field strength in the parameter (4) and the identifier of the reference signal resource #i in the parameter (1), a sequence number of the subcarrier #j may be further provided, to uniquely identify the corresponding reference signal or beam.

In this scenario, a method for determining the location of the target terminal device by the target terminal device or the LMF is the same as the foregoing method. For example, the target terminal device measures RSRP of reference signals corresponding to beams transmitted on different frequency domain units, and determines the location of the target terminal device based on a beam corresponding to a frequency domain unit with largest RSRP or relative RSRP of the beams on the different frequency domain units. Details are not described herein again.

The foregoing describes in detail the downlink positioning method in the near-field communication, and the following continues to describe uplink positioning in the near-field communication.

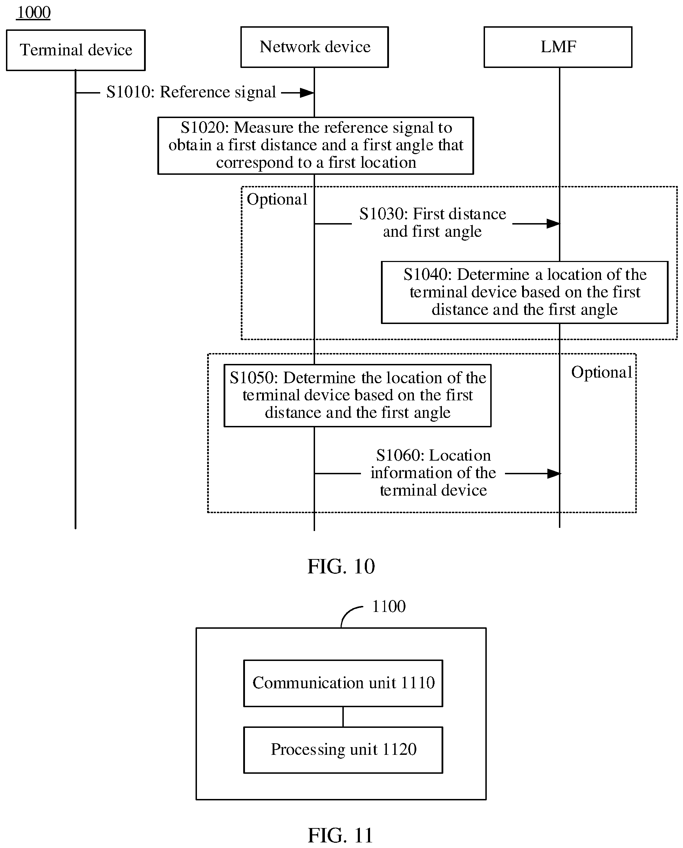

FIG. 10 is a schematic flowchart of a near-field positioning method 1000 according to this application. The method is applicable to uplink positioning, and the method includes the following steps.

S 1010: A terminal device sends a reference signal to a network device. Correspondingly, the network device receives the reference signal from the terminal device.

Optionally, the reference signal may be an SRS, or may be another positioning-related reference signal. This is not limited in this application.

S1020: The network device measures the reference signal to obtain a first distance and a first angle that correspond to a first location, where the first location is a location in a near-field communication range of the network device, the first distance is a distance between the first location and a reference antenna of the network device, and the first angle is an angle of the first location relative to the reference antenna.

It should be understood that the first distance and the first angle are used to determine a location of the terminal device. Because the location determined based on the distance and the angle that correspond to the first location is the first location, the first location is used as the location of the terminal device in the method.

In a possible implementation, an implementation method for obtaining the first distance and the first angle by the network device is as follows: The network device measures a positioning reference signal sent by the terminal device, and obtains a channel H used for transmission of the reference signal. The network device multiplies the channel H by precoding vectors at different locations, and a distance and an angle that correspond to a precoding vector with a largest multiplication value are respectively the first distance and the first angle.

It may be understood that different locations herein are a plurality of locations in the near-field communication range. This is not specifically limited in this application.

For example, the network device may obtain the first distance and the first angle based on a near-field Music algorithm. The following describes in detail a process of obtaining the first distance and the first angle based on the algorithm.

(1) X is a reference signal received by the network device, N is noise, A is a steering vector, and S is a reference signal sent by the terminal device. In this case, X satisfies:

$$X = A * S + N$$

$X = [x_1(t), x_2(t), ... , x_M(t)]^T$, and M represents a quantity of array elements of an antenna.

$S = [s_1(t), s_2(t), ... , s_D(t)]^T$, and D represents a quantity of signal sources.

$A = [a(\varphi_1, r_1), a(\varphi_2, r_2), ... a(\varphi_D, r_D)]$, and $\varphi$ and r respectively represent an angle and a distance from the signal source to the array element.

$N = [n_1(t), n_2(t), ..., n_M(t)]^T$.

(2) According to a matrix eigenvalue decomposition theory, eigen decomposition is performed on a covariance matrix of an arrayc X, and *M- D* small eigenvalues are selected to construct a noise matrix $E_n$:

$$E_n = [v_{D+1}, v_{D+2}, ... , v_M]$$

$v_{D+1}, v_{D+2}, ... ,$ and $v_M$ represent eigenvectors.

(3) A spectrum function $P(\varphi, r)$ is defined:

$$P(\varphi, r) = \frac{1}{\|E_n^H a(\varphi, r)\|^2}$$

Therefore, the network device may scan $(\varphi, r)$, and resolve corresponding $(\hat{r}, \hat{\varphi})$ in a case in which the foregoing spectrum function is maximized, to resolve the location of the terminal device.

It should be understood that the foregoing is merely an example of obtaining the first distance and the first angle based on the Music algorithm. In practice, the first distance and the first angle may alternatively be obtained based on another algorithm. This is not limited in this application.

Optionally, after measuring the reference signal, the network device may send a measurement result to an LMF, and the LMF determines the location of the terminal device. In this case, the method may further include S1030 and S1040.

S1030: The network device sends the first distance and the first angle to the LMF. Correspondingly, the LMF receives the first distance and the first angle from the network device.

S1040: The LMF determines the location of the terminal device based on the first distance and the first angle, where the location of the terminal device is the first location.

Optionally, after measuring the reference signal, the network device may determine the location of the terminal device based on the measurement result. In this case, the method may further include S1050 and S1060.

S1050: The network device determines the location of the terminal device based on the first distance and the first angle, where the location of the terminal device is the first location.

S1060: The network device sends location information of the terminal device to the LMF. Correspondingly, the LMF receives the location information of the terminal device from the network device.

For example, if the network device is an O-RAN device, S1110 may be implemented by a DU and/or an RU, and S1120 may be implemented by a CU-CP, a CU-UP, or the DU.

Optionally, in this application, near-field single-station positioning is further implemented by using a carrier phase method. At least three antennas may be selected on an antenna panel, and a location of a target terminal device may be determined based on phases or phase differences of signals transmitted by the target terminal device upon arrival those three antennas on the antenna panel of the network device.

It should be understood that sequence numbers of the foregoing processes do not indicate an execution sequence. The execution sequence of the processes should be determined based on functions and internal logic of the processes, and should not be construed as any limitation on the implementation processes of embodiments of this application.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the methods and operations implemented by a device (for example, the LMF or the terminal device) may alternatively be implemented by a component (for example, a chip or a circuit) of the device.

The foregoing describes in detail the methods provided in embodiments of this application with reference to FIG. 1 to FIG. 10. The foregoing methods are mainly described from a perspective of interaction between the LMF and the terminal device. It may be understood that, to implement the foregoing functions, the LMF and the terminal device include corresponding hardware structures and/or software modules for performing the functions.

A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

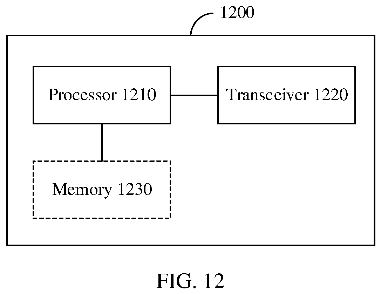

The following describes in detail communication apparatuses provided in embodiments of this application with reference to FIG. 11 and FIG. 12. It should be understood that descriptions of apparatus embodiments correspond to the descriptions of method embodiments. Therefore, for content that is not described in detail, refer to the foregoing method embodiments. For brevity, some content is not described again. In embodiments of this application, functional modules of the LMF or the terminal device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. The following uses an example in which each functional module is obtained through division based on each corresponding function for description.

The foregoing describes in detail a data transmission method provided in this application, and the following describes the communication apparatuses provided in this application. In a possible implementation, the apparatus is configured to implement the steps or procedures corresponding to the terminal device in the foregoing method embodiments. In another possible implementation, the apparatus is configured to implement the steps or procedures corresponding to the LMF in the foregoing method embodiments.

FIG. 11 is a block diagram of a communication apparatus 1100 according to an embodiment of this application. As shown in FIG. 11, the apparatus 1100 may include a communication unit 1110 and a processing unit 1120. The communication unit 1110 may communicate with the outside, and the processing unit 1120 is configured to perform data processing. The communication unit 1110 may also be referred to as a communication interface or a transceiver unit.

Optionally, the transceiver unit may include a receiving unit and a sending unit. This is not limited in this application.

In a possible design, the apparatus 1100 may implement the corresponding steps or procedures performed by the LMF in the foregoing method embodiments. The processing unit 1120 is configured to perform an operation related to processing of the LMF in the foregoing method embodiments, and the communication unit 1110 is configured to perform an operation related to sending of the LMF in the foregoing method embodiments. For example, in the method 800, the communication unit 1110 may be configured to perform the operation performed by the LMF in S820, and the processing unit 1120 may be configured to perform the operation performed by the LMF in S830.

In another possible design, the apparatus 1100 may implement the steps or procedures performed by the terminal device in the foregoing method embodiments. The communication unit 1110 is configured to perform an operation related to receiving of the terminal device in the foregoing method embodiments, and the processing unit 1120 is configured to perform an operation related to processing of the terminal device in the foregoing method embodiments. For example, in the method 500, the processing unit 1120 may be configured to perform the operations performed by the terminal device in S510 and S520, and the communication unit 1110 may be configured to perform the operation performed by the terminal device in S530. For another example, in the method 800, the processing unit 1120 may be configured to perform the operations performed by the terminal device in S810 and S840, and the communication unit 1110 may be configured to perform the operation performed by the terminal device in S820.

Optionally, the communication apparatus 1100 may further include a storage unit. The storage unit may be configured to store instructions and/or data. The processing unit 1120 may read the instructions and/or the data in the storage unit, to cause the communication apparatus 1100 to implement the foregoing method embodiments.

It should be understood that the apparatus 1100 herein is presented in a form of functional units. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that the apparatus 1100 may be specifically the LMF in the foregoing embodiments, and may be configured to perform the procedures and/or steps corresponding to the LMF in the foregoing method embodiments. Alternatively, the apparatus 1100 may be specifically the terminal device in the foregoing embodiments, and may be configured to perform the procedures and/or steps corresponding to the terminal device in the foregoing method embodiments. To avoid repetition, details are not described herein again.

The apparatus 1100 in the foregoing solutions has a function of implementing the corresponding steps performed by the LMF in the foregoing methods, or the apparatus 1100 in the foregoing solutions has a function of implementing the corresponding steps performed by the terminal device in the foregoing methods. The function may be implemented by hardware, or may be implemented by hardware executing corresponding software. The hardware or software includes one or more modules corresponding to the foregoing function. For example, the communication unit may be replaced with a transceiver (for example, the sending unit of the communication unit may be replaced with a transmitter, and the receiving unit of the communication unit may be replaced with a receiver), and another unit like the processing unit may be replaced with a processor, to separately perform sending and receiving operations and a related processing operation in each method embodiment.

In an implementation, the communication apparatus is a device (for example, a terminal device, an LMF, or a network device). When the communication apparatus is the device, the transceiver unit may be a transceiver or an input/output interface, and the processing unit may be at least one processor or a processor-related circuit. Optionally, the transceiver may be a transceiver circuit (for example, may include a receiver circuit and a transmitter circuit). Optionally, the input/output interface may be an input/output circuit.

In another implementation, the communication apparatus is a chip, a chip system, or a circuit used in a device (for example, a terminal device, an LMF, or a network device). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be a processor, a microprocessor, an integrated circuit, or the like integrated into the chip, the chip system, or the circuit.

FIG. 12 is a block diagram of a communication apparatus 1200 according to an embodiment of this application. The apparatus 1200 includes a processor 1210 and a transceiver 1220. The processor 1210 and the transceiver 1220 communicate with each other through an internal connection path, and the processor 1210 is configured to execute instructions, to control the transceiver 1220 to send a signal and/or receive a signal.

Optionally, the apparatus 1200 may further include a memory 1230. The memory 1230 communicates with the processor 1210 and the transceiver 1220 through internal connection paths. The memory 1230 is configured to store the instructions, and the processor 1210 may execute the instructions stored in the memory 1230.

Optionally, the memory 1230 may include a read-only memory and a random access memory, and provide the instructions and data for the processor. A part of the memory may further include a non-volatile random access memory. For example, the memory may further store information of a device type. The memory 1230 is configured to store the instructions. The processor 1210 may be configured to execute the instructions stored in the memory. When the processor 1210 executes the instructions stored in the memory, the processor 1210 is configured to perform the steps and/or procedures corresponding to the LMF or the terminal device in the foregoing method embodiments.

Optionally, the communication apparatus 1200 may include one or more memories 1230.

Optionally, the memory 1230 and the processor 1210 may be integrated together or disposed separately.

In a possible implementation, the apparatus 1200 is configured to implement the procedures and steps corresponding to the LMF in the foregoing method embodiments. For example, in the method 800, the transceiver 1220 may be configured to perform the operation performed by the LMF in S820, and the processor 1210 may be configured to perform the operation performed by the LMF in S830.

In another possible implementation, the apparatus 1200 is configured to implement the procedures and steps corresponding to the terminal device in the foregoing method embodiments. For example, in the method 500, the processor 1210 may be configured to perform the operations performed by the terminal device in S510 and S520, and the transceiver 1220 may be configured to perform the operation performed by the terminal device in S530. For another example, in the method 800, the processor 1210 may be configured to perform the operations performed by the terminal device in S810 and S840, and the transceiver 1220 may be configured to perform the operation performed by the terminal device in S820.

In an implementation, the communication apparatus 1200 is a device (for example, a terminal device, an LMF, or a network device). When the communication apparatus is the device, the transceiver may be an input/output interface, and the processor may be at least one processor-related circuit. Optionally, the transceiver may be a transceiver circuit (for example, may include a receiver circuit and a transmitter circuit). Optionally, the input/output interface may be an input/output circuit.

In another implementation, the communication apparatus 1200 is a chip, a chip system, or a circuit used in a device (for example, a terminal device, an LMF, or a network device). The transceiver may be an input/output circuit or a communication interface, and the processor may be a processing module integrated into the chip, a microprocessor, or an integrated circuit. The sending operation of the device in the foregoing method embodiments may be understood as outputting of the chip, and the receiving operation of the device in the foregoing method embodiments may be understood as inputting of the chip.

It should be understood that the apparatus 1200 may be specifically the LMF or the terminal device in the foregoing embodiments, or may be the chip or the chip system. Correspondingly, the transceiver 1220 may be a transceiver circuit of the chip. This is not limited herein. Specifically, the apparatus 1200 may be configured to perform the steps and/or procedures corresponding to the LMF or the terminal device in the foregoing method embodiments.

Optionally, the transceiver includes a transmitter and a receiver, to respectively implement sending and receiving steps of the device (for example, the terminal device, the LMF, or the network device) in embodiments of this application. When the apparatus 1200 is the chip, the transmitter and the receiver may be used as an input/output interface of the chip. The transmitter corresponds to an output, and the receiver corresponds to an input.

In an implementation process, steps in the foregoing methods may be completed by using a hardware integrated logic circuit in the processor, or by using instructions in a form of software. The steps of the methods disclosed with reference to embodiments of this application may be directly performed and completed by a hardware processor, or may be performed and completed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using the hardware integrated logic circuit in the processor, or by using the instructions in the form of software. The processor may be a general-purpose processor, digital signal processing (digital signal processing, DSP), an ASIC, a field programmable gate array (field programmable gate array, FPGA) or another programmable logic device, a discrete gate or a transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads the information in the memory and completes the steps in the foregoing methods in combination with the hardware of the processor.

It may be understood that the memory in this embodiment of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but are not limited to these memories and any memory of another appropriate type.

It should be noted that, when the processor is the general-purpose processor, the DSP, the ASIC, the FPGA or the another programmable logic device, the discrete gate or the transistor logic device, or the discrete hardware component, the memory (storage module) may be integrated into the processor.

In addition, this application further provides a computer-readable storage medium. The computer-readable storage medium stores computer instructions. When the computer instructions are run on a computer, the operations and/or procedures performed by the LMF or the terminal device in method embodiments of this application are performed.

This application further provides a computer program product. The computer program product includes computer program code or instructions. When the computer program code or the instructions are run on a computer, the operations and/or procedures performed by the LMF or the terminal device in method embodiments of this application are performed.

In addition, this application further provides a chip. The chip includes a processor. A memory configured to store a computer program is disposed independent of the chip, and the processor is configured to execute the computer program stored in the memory, to cause an operation and/or processing performed by the LMF or the terminal device in any method embodiment to be performed.

Further, the chip may include a communication interface. The communication interface may be an input/output interface, an interface circuit, or the like. Further, the chip may include the memory.

In addition, this application further provides a communication system, including at least one network element of the LMF, the terminal device, and the network device in embodiments of this application.

It should be further noted that, the memories described in this specification are intended to include but are not limited to these memories and any memory of another appropriate type.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for detailed working processes of the foregoing systems, apparatuses, and units, refer to corresponding processes in the foregoing method embodiments. Details are not described herein again. In the several embodiments provided in this application, it should be understood that the disclosed systems, apparatuses, and methods may be implemented in other manners. For example, the foregoing described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form. The units described as separate parts may or may not be physically separate, and parts displayed as units may or may not be physical units, that is, may be located in one position, or may be distributed on a plurality of network units. A part or all of the units may be selected based on actual requirements to achieve objectives of the solutions of embodiments. In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, a contributing part, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

It should be understood that, an "embodiment" mentioned throughout the specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A near-field positioning method, comprising:

    measuring, by a terminal device, N reference signals corresponding to N beams from a network device, to obtain reference signal received power RSRP corresponding to the N beams, wherein N is a positive integer; and
    determining, by the terminal device, a location of the terminal device based on the RSRP corresponding to the N beams and based on distances and angles corresponding to the N beams, wherein a distance corresponding to a first beam is a distance between a center location of the first beam and a reference antenna of the network device, an angle corresponding to the first beam is an angle of the center location of the first beam relative to the reference antenna, and the first beam is any one of the N beams.

2. The method according to claim 1, wherein N is equal to 1, and the N beams are a beam with largest RSRP in at least one beam that is received by the terminal device from the network device.

3. The method according to claim 1, wherein N is greater than 1, and the determining, by the terminal device, the location of the terminal device based on the RSRP corresponding to the N beams and based on the distances and the angles corresponding to the N beams comprises:
determining, by the terminal device, the location of the terminal device based on ratios of the RSRP corresponding to the N beams to RSRP corresponding to a reference beam, and the distances and angles corresponding to the N beams, wherein the reference beam is any one of the N beams.

4. The method according to any one of claims 1 to 3, wherein the method further comprises:

    receiving, by the terminal device, a first request message from a location management function LMF, wherein the first request message is used to request to perform positioning measurement on the terminal device; and
    sending, by the terminal device, a response to the first request message to the LMF, wherein the response to the first request message comprises location information of the terminal device.

5. The method according to any one of claims 1 to 4, wherein the method further comprises:
receiving, by the terminal device, first information from the location management function LMF, wherein the first information comprises at least one of the following parameters:
identifiers of N reference signal resources corresponding to the N reference signals, configuration information of the N reference signals, information about a distance and an angle that correspond to any one of the N beams, and relative field strength values of the N reference signals at a plurality of first locations corresponding to a plurality of first combinations, wherein the plurality of first combinations are in one-to-one correspondence with the plurality of first locations, the first combination comprises a first distance and a first angle, and the first distance and the first angle are used to determine a corresponding first location.

6. The method according to claim 5, wherein the method further comprises:
receiving, by the terminal device, the N reference signals from the network device on the N reference signal resources, wherein the N reference signal resources correspond to different frequency domain units.

7. The method according to claim 6, wherein the first information further comprises an identifier of a frequency domain unit corresponding to any one of the N reference signal resources.

8. A near-field positioning method, comprising:

   measuring, by a terminal device, at least one reference signal corresponding to at least one beam from a network device, to obtain reference signal received power RSRP corresponding to the at least one beam; and
   sending, by the terminal device, first information to a location management function LMF, wherein
   the first information indicates a reference signal resource corresponding to a beam with largest RSRP in the at least one beam; or
   the first information indicates RSRP corresponding to N beams or ratios of the RSRP corresponding to the N beams to RSRP corresponding to a reference beam, wherein N is a positive integer, and the reference beam is any one of the N beams.

9. The method according to claim 8, wherein the method further comprises:

   receiving, by the terminal device, a first request message from the LMF, wherein the first request message is used to request to perform positioning measurement on the terminal device; and
   the sending, by the terminal device, the first information to the location management function LMF comprises:
   sending, by the terminal device, a response to the first request message to the LMF, wherein the response to the first request message comprises the first information.

10. The method according to claim 8 or 9, wherein the method further comprises:
    receiving, by the terminal device, second information from the LMF, wherein the second information comprises at least one of the following parameters:
    an identifier of at least one reference signal resource and configuration information of the at least one reference signal, wherein the at least one reference signal resource comprises a reference signal resource corresponding to each of the at least one reference signal.

11. The method according to any one of claims 8 to 10, wherein the method further comprises:
    receiving, by the terminal device, the at least one reference signal from the network device on the reference signal resource corresponding to the at least one reference signal, wherein the at least one reference signal resource corresponds to different frequency domain units.

12. The method according to claim 10, wherein the second information further comprises an identifier of a frequency domain unit corresponding to any one of the reference signal resource corresponding to the at least one reference signal.

13. A near-field positioning method, comprising:

    receiving, by a location management function LMF, first information from a terminal device, wherein
    the first information indicates a reference signal resource corresponding to a beam with largest reference signal received power RSRP in at least one beam that is received by the terminal device from a network device; or
    the first information indicates RSRP corresponding to N beams or ratios of the RSRP corresponding to the N beams to RSRP corresponding to a reference beam, wherein the reference beam is any one of the N beams; and
    determining, by the LMF, a location of the terminal device based on the first information.

14. The method according to claim 13, wherein if the first information indicates the reference signal resource corresponding to the beam with the largest RSRP in the at least one beam that is received by the terminal device from the network device, the determining, by the LMF, the location of the terminal device based on the first information comprises:
    determining, by the LMF, the location of the terminal device based on a distance and an angle that correspond to the beam with the largest RSRP, wherein the distance corresponding to the beam with the largest RSRP is a distance between a center location of the beam with the largest RSRP and a reference antenna of the network device, and the angle corresponding to the beam with the largest RSRP is an angle of the center location of the beam with the largest RSRP relative to the reference antenna.

15. The method according to claim 13, wherein if the first information indicates the RSRP corresponding to the N beams or the ratios of the RSRP corresponding to the N beams to the RSRP corresponding to the reference beam, the determining, by the LMF, the location of the terminal device based on the first information comprises:
    determining, by the LMF, the location of the terminal device based on the ratios of the RSRP corresponding to the N beams to the RSRP corresponding to the reference beam, and distances and angles that correspond to the N beams.

16. The method according to any one of claims 13 to 15, wherein the method further comprises:

    sending, by the LMF, a first request message to the terminal device, wherein the first request message is used to request to perform positioning measurement on the terminal device; and
    the receiving, by the LMF, the first information from the terminal device comprises:
    receiving, by the LMF, a response to the first request message from the terminal device, wherein the response to the first request message comprises the first information.

17. The method according to any one of claims 13 to 16, wherein the method further comprises:
    sending, by the LMF, second information to the terminal device, wherein the second information comprises at least one of the following parameters:
    an identifier of at least one reference signal resource and configuration information of a reference signal corresponding to the at least one beam, wherein the at least one reference signal resource comprises a reference signal resource corresponding to each of the at least one beam.

18. The method according to claim 17, wherein the second information further comprises an identifier of a frequency domain unit corresponding to any one of the at least one reference signal resource.

19. The method according to claim 17 or 18, wherein the method further comprises:

    sending, by the LMF, a second request message to the network device, wherein the second request message is used to request the second information; and
    receiving, by the LMF, a second request response message from the network device, wherein the second request response message comprises the second information.

20. A near-field positioning method, comprising:

    receiving, by a network device, a reference signal from a terminal device;
    measuring, by the network device, the reference signal to obtain a first distance and a first angle that correspond to a first location, wherein the first location is a location in a near-field communication range of the network device, the first distance is a distance between the first location and a reference antenna of the network device, and the first angle is an angle of the first location relative to the reference antenna; and
    sending, by the network device, the first distance and the first angle to a location management function LMF, receiving, by the LMF, the first distance and the first angle from the network device, and
    determining, by the LMF, a location of the terminal device based on the first distance and the first angle, wherein the location of the terminal device is the first location; or
    sending, by the network device, location information of the terminal device to the LMF, wherein the location of the terminal device is the first location determined based on the first distance and the first angle, and
    receiving, by the LMF, the location information of the terminal device from the network device.

21. A communication apparatus, wherein the apparatus comprises a module configured to perform the method according to any one of claims 1 to 7, a module configured to perform the method according to any one of claims 8 to 12, a module configured to perform the method according to any one of claims 13 to 19, or a module configured to perform the method according to claim 20.

22. A communication apparatus, comprising:
    a processor, configured to execute a computer program stored in a memory, to cause the apparatus to perform the method according to any one of claims 1 to 7, to cause the apparatus to perform the method according to any one of claims 8 to 12, to cause the apparatus to perform the method according to any one of claims 13 to 19, or to cause the apparatus to perform the method according to claim 20.

23. A computer-readable storage medium, wherein the computer-readable storage medium stores a computer program; and when the computer program is run on a computer, the computer is caused to perform the method according to any one of claims 1 to 7, the computer is caused to perform the method according to any one of claims 8 to 12, the computer is caused to perform the method according to any one of claims 13 to 19, or the computer is caused to perform the method according to claim 20.

100

TP
ng-eNB
TP

LTE-Uu

Xn

NG-C

LMF

NL 1

E-SMLC

SLP

UE
SET

NR-Uu

TRP
gNB
TRP

NG-C

AMF

NG-RAN

FIG. 1

200

LMF
105

LPP

NRPPa

UE 101

Serving base station
102

FIG. 2

| UE | NG-RAN | NG-RAN | NG-RAN | LMF |

301: LPP capability transfer

302: TRP information request

303: TRP information response

304: Assistance data transfer

305: Request location information

306: Measure a PRS and obtain a measurement result

307: Provide location information

FIG. 3

Far field

d2

D

d1

Reactive
near
field

Radiative near
field

FIG. 4

500

| Network device | | Terminal device |

S530: Send a reference signal by
using at least one beam, where the at
least one beam includes N beams

S510: Measure reference signals
corresponding to the N beams, to obtain
RSRP corresponding to the N beams

S520: Determine a location of the terminal
device based on the RSRP corresponding
to the N beams and based on distances and
angles corresponding to the N beams

FIG. 5

Center location
of a first beam

$r_{(-M)}$

$\varphi_0$

$r_0$

Antenna
(−M)

Antenna
(−M+1)

...

Antenna
0

...

Antenna
(M−1)

Antenna
M

$d_{(-M)}$

FIG. 6

PRS #0

PRS #1

PRS #2

PRS #3

PRS #4

FIG. 7

800

| Network device | | Terminal device | | LMF |

S840: Send a reference signal by using at least one beam →

S810: Measure the reference signal corresponding to the at least one beam, to obtain RSRP corresponding to the at least one beam

S820: First information →

S830: Determine a location of the terminal device based on the first information

FIG. 8

FIG. 9

1000

| | | |
|---|---|---|
| Terminal device | Network device | LMF |

— S1010: Reference signal →

S1020: Measure the reference signal to obtain a first distance and a first angle that correspond to a first location

Optional

S1030: First distance and first angle →

S1040: Determine a location of the terminal device based on the first distance and the first angle

S1050: Determine the location of the terminal device based on the first distance and the first angle

Optional

S1060: Location information of the terminal device →

## FIG. 10

⌒ 1100

Communication unit 1110

Processing unit 1120

## FIG. 11

1200

Processor 1210 —— Transceiver 1220

Memory 1230

FIG. 12

## INTERNATIONAL SEARCH REPORT

| International application No. |
|---|
| **PCT/CN2024/125529** |

**A. CLASSIFICATION OF SUBJECT MATTER**

G01S 5/10(2006.01)i; H04W64/00(2009.01)i

According to International Patent Classification (IPC) or to both national classification and IPC

**B. FIELDS SEARCHED**

Minimum documentation searched (classification system followed by classification symbols)

IPC: G01S, H04W

Documentation searched other than minimum documentation to the extent that such documents are included in the fields searched

Electronic data base consulted during the international search (name of data base and, where practicable, search terms used)

DWPI, CNTXT, WPABS, ENTXT, ENTXTC, CNKI: 定位, 位置, 近场, 波束, 参考, 参考信号, 接收功率, 距离, 角度, 终端, 中心, 天线, 比值, 标识, 配置信息, 场强, 频域, 指示, position, near-field, beam, reference, reference signal, receive, power, distance, angle, terminal, center, antenna, ratio, identif+, configuration information, field strength, frequency domain, indicat+, RSRP, LMF, PRS

**C. DOCUMENTS CONSIDERED TO BE RELEVANT**

| Category* | Citation of document, with indication, where appropriate, of the relevant passages | Relevant to claim No. |
|---|---|---|
| Y | CN 114026927 A (HUAWEI TECHNOLOGIES CO., LTD.) 08 February 2022 (2022-02-08) description, paragraphs [0069]-[0239], and figures 1-12 | 1-2, 4, 8-14, 16-23 |
| Y | CN 115336336 A (QUECTEL WIRELESS SOLUTIONS CO., LTD.) 11 November 2022 (2022-11-11) description, paragraphs [0048]-[0118], and figures 2-12 | 1-2, 4, 8-14, 16-23 |
| A | CN 111164904 A (SONY CORP.) 15 May 2020 (2020-05-15) entire document | 1-23 |
| A | CN 111562546 A (CHINA ACADEMY OF TELECOMMUNICATIONS TECHNOLOGY) 21 August 2020 (2020-08-21) entire document | 1-23 |
| A | CN 112333624 A (HUAWEI TECHNOLOGIES CO., LTD.) 05 February 2021 (2021-02-05) entire document | 1-23 |
| A | CN 116648964 A (HUAWEI TECHNOLOGIES CO., LTD.) 25 August 2023 (2023-08-25) entire document | 1-23 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 December 2024** | **03 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/125529** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2022279367 A1 (SAMSUNG ELECTRONICS CO., LTD.) 01 September 2022 (2022-09-01)<br>entire document | 1-23 |

**INTERNATIONAL SEARCH REPORT**
**Information on patent family members**

International application No.

**PCT/CN2024/125529**

| Patent document cited in search report | | | Publication date (day/month/year) | Patent family member(s) | | | Publication date (day/month/year) |
|---|---|---|---|---|---|---|---|
| CN | 114026927 | A | 08 February 2022 | WO | 2021081811 | A1 | 06 May 2021 |
| | | | | EP | 4044704 | A1 | 17 August 2022 |
| | | | | US | 2022263591 | A1 | 17 August 2022 |
| CN | 115336336 | A | 11 November 2022 | WO | 2023212938 | A1 | 09 November 2023 |
| CN | 111164904 | A | 15 May 2020 | WO | 2019072167 | A1 | 18 April 2019 |
| | | | | EP | 3696990 | A1 | 19 August 2020 |
| | | | | US | 2020212978 | A1 | 02 July 2020 |
| | | | | US | 11043997 | B2 | 22 June 2021 |
| | | | | CN | 109660284 | A | 19 April 2019 |
| | | | | CN | 115426008 | A | 02 December 2022 |
| CN | 111562546 | A | 21 August 2020 | TW | 202031072 | A | 16 August 2020 |
| | | | | WO | 2020164361 | A1 | 20 August 2020 |
| | | | | TW | 726612 | B1 | 01 May 2021 |
| | | | | KR | 20210124454 | A | 14 October 2021 |
| | | | | KR | 102658679 | B1 | 17 April 2024 |
| | | | | EP | 3926357 | A1 | 22 December 2021 |
| | | | | US | 2022150866 | A1 | 12 May 2022 |
| | | | | CN | 115551079 | A1 | 30 December 2022 |
| | | | | US | 11792766 | B2 | 17 October 2023 |
| | | | | EP | 3926357 | B1 | 30 October 2024 |
| CN | 112333624 | A | 05 February 2021 | WO | 2021008581 | A1 | 21 January 2021 |
| | | | | KR | 20220031086 | A | 11 March 2022 |
| | | | | EP | 3993451 | A1 | 04 May 2022 |
| | | | | US | 2022141797 | A1 | 05 May 2022 |
| CN | 116648964 | A | 25 August 2023 | WO | 2022141592 | A1 | 07 July 2022 |
| US | 2022279367 | A1 | 01 September 2022 | WO | 2020222518 | A1 | 05 November 2020 |
| | | | | EP | 3963974 | A1 | 09 March 2022 |
| | | | | KR | 20200127529 | A | 11 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311435298